# EUROPÄISCHE PATENTSCHRIFT

(11) **EP 3 092 102 B1**
(45) Veröffentlichungstag und Bekanntmachung des Hinweises auf die Patenterteilung: **11.05.2022**
(21) Anmeldenummer: 14755354.9
(22) Anmeldetag: 21.08.2014
(51) Int. Cl.: B23K 26/14, B23K 26/38, B23K 31/10, B23K 26/30, B23K 26/08, B23K 26/10, B26D 5/00, B26D 7/22, G05B 19/4061

(54) **VERFAHREN UND VORRICHTUNG ZUR TRENNENDEN BEARBEITUNG EINES WERKSTÜCKS**
METHOD AND DEVICE FOR SEPARATIVELY MACHINING A WORKPIECE
PROCÉDÉ ET DISPOSITIF D'USINAGE D'UNE PIÈCE PAR TRONÇONNAGE

(30) Priorität: 09.01.2014 DE 102014200208
(43) Veröffentlichungstag der Anmeldung: 16.11.2016
(73) Patentinhaber: Trumpf Werkzeugmaschinen GmbH + Co. KG, 71254 Ditzingen (DE)
(72) Erfinder: SEPP, Florian, 86972 Altenstadt (DE); WEISS, Christoph, 82383 Hohenpeißenberg (DE)
(74) Vertreter: Kohler Schmid Möbus Patentanwälte
(86) Internationale Anmeldenummer: PCT/EP2014/067796
(87) Internationale Veröffentlichungsnummer: WO 2015/104071

(56) Entgegenhaltungen:
- JP-A- H09 285 886
- JP-A- S62 298 807
- US-A1- 2014 005 822
- US-B1- 6 609 044

## Beschreibung

Die Erfindung betrifft ein Verfahren und eine Laserschneidvorrichtung, zur trennenden Bearbeitung eines platten- oder rohrförmigen Werkstücks mit auszuschneidenden Werkstückteilen, wobei jedes Werkstückteil in einem Laserschneidprozess mithilfe eines in zumindest einer Schneidhöhe über dem Werkstück positionierten Schneidkopfes entlang einer Schneidkontur ausgeschnitten wird.

Im Handel verfügbare 2D-Laserschneidvorrichtungen mit einem verfahrbaren Schneidkopf ermöglichen eine automatisierte Fertigung von Werkstückteilen in großer Stückzahl und mit hoher Präzision. Beim Ausschneiden der Werkstückteile aus einem Werkstück kann das Problem auftreten, dass ein ausgeschnittenes Werkstückteil gegenüber dem Werkstück verkippt. Dies kann zu einer Kollision mit dem in Schneidhöhe positionierten Schneidkopf führen.

Bislang wird dieses Problem durch eine reduzierte Packungsdichte der Werkstückteile gelöst, das heißt, die Werkstückteile werden so weit auseinander positioniert, dass eine Kollision zwischen einem verkippten Werkstückteil und dem Schneidkopf zuverlässig vermieden werden kann. Nachteilig bei dieser Vorgehensweise ist die relativ schlechte Materialausnutzung und die damit einher gehende geringere Produktivität. Hinzu kommt, dass es oftmals nicht möglich ist, den Abstand zwischen zwei Werkstückteilen zu verändern, beispielsweise wenn ein Werkstückteil ein oder mehrere andere Werkstückteile enthält, die an vorgegebenen Positionen relativ zum äußeren Werkstückteil geschnitten werden müssen.

Bekannt ist auch das Fixieren der fast vollständig freigeschnittenen Werkstückteile durch so genannte "Microjoints", das heißt, schmaler Verbindungsstege am übrigen Werkstück (Restgitter). Das Setzen der Microjoints verhindert ein Verkippen der ausgeschnittenen Werkstückteile und damit Kollisionen zwischen diesen und dem Schneidkopf. Die Microjoints werden nach Abarbeiten aller Werkstückteile zum Freilegen der Werkstückteile aufgetrennt. Das Auftrennen der Microjoints kann manuell oder maschinell erfolgen, wobei gegebenenfalls eine Nachbearbeitung der Schnittkanten erforderlich ist. Bei Werkstückteilen mit kleinen Toleranzen ist es manchmal unmöglich, Microjoints überhaupt zu verwenden.

Aus US 2014/0005822 A1 ist ein Laserschneidverfahren bekannt, bei dem ermittelt wird, ob Positionen innerhalb oder außerhalb einer Kontur eines Werkstückteils liegen. Die Werkstückteile werden mit Joints gehalten bis festgestellt wird, dass ein sicheres Entfernen möglich ist.

Demgegenüber besteht die Aufgabe der vorliegenden Erfindung darin, herkömmliche Verfahren zur trennenden Bearbeitung von Werkstücken in vorteilhafter Weise weiterzubilden, wobei Kollisionen zwischen verkippten Werkstückteilen und einem Schneidkopf zuverlässig und sicher vermieden werden sollen. Zudem soll das Verfahren die Herstellung von Werkstückteilen mit hoher Packungsdichte auf dem Werkstück ermöglichen und Werkstückteile sollen mit hoher Präzision der Schnittkanten und kleinen Toleranzen herstellbar sein. Ferner sollen Werkstückteile innerhalb eines anderen Werkstückteils einfach und zuverlässig mit hoher Präzision herstellbar sein.

Diese und weitere Aufgaben werden nach dem Vorschlag der Erfindung durch ein Verfahren nach Anspruch 1 sowie eine Laserschneidvorrichtung nach Anspruch 13 gelöst. Vorteilhafte Ausgestaltungen der Erfindung sind durch die Merkmale der abhängigen Ansprüche angegeben.

Erfindungsgemäß ist ein Verfahren zur trennenden Bearbeitung eines platten- oder rohrförmigen Werkstücks mit auszuschneidenden Werkstückteilen gezeigt. Das Werkstückteil wird in einem Laserschneidprozess mithilfe eines in zumindest einer Schneidhöhe über dem Werkstück positionierten Schneidkopfes entlang einer Schneidkontur ausgeschnitten wird, wobei zumindest ein ausgeschnittenes Werkstückteil relativ zum Werkstück verkippbar ist. Das Verfahren umfasst die folgenden Schritte:
(I) Bestimmen von Sicherheitszonen für die Schneidkonturen, wobei die Sicherheitszone einer Schneidkontur einen Bereich angibt, in dem eine Kollision zwischen dem in Schneidhöhe positionierten Schneidkopf und dem zugehörigen verkippten Werkstückteil auftreten kann. Die Sicherheitszonen stellen Kollisionsbereiche für eine mögliche Kollision zwischen dem zugehörigen Werkstückteil und dem auf Schneidhöhe positionierten Schneidkopf dar.
(II) Bestimmen von Halteteilen für die Schneidkonturen der Werkstückteile, derart, dass die Schneidkontur eines Werkstückteils in einen, ein oder mehrere Haltestege aufweisenden, Halteteil und einen, ein oder mehrere Frühstege aufweisenden Frühteil aufgeteilt wird oder der Halteteil durch die komplette Schneidkontur gegeben ist, wobei für jede Schneidkontur mindestens ein Halteteil bestimmt wird. Im Unterschied zu Microjoints, bei denen es sich um schmale Verbindungsstege der Werkstückteile zum Restgitter handelt, können die Halteteile auch größere Haltestege aufweisen, die sich beispielsweise auch um die Ecke einer Kontur erstrecken können. Insbesondere kann der Halteteil auch durch die komplette Schneidkontur gegeben sein. Der Frühteil einer Schneidkontur ist stets vor deren Halteteil zu schneiden. Jedoch können während oder nach dem Schneiden des Frühteils einer Schneidkontur auch andere Schneidkonturen geschnitten werden.
(III) Auswählen eines einzigen Halteteils oder mindestens eines Haltestegs für jede Schneidkontur, derart, dass es mindestens eine Bearbeitungsreihenfolge zum Ausschneiden der Schneidkonturen gibt, in welcher der Frühteil einer Schneidkontur vor dem Halteteil der Schneidkontur geschnitten wird, wobei vor dem Schneiden des Halteteils der Schneidkontur ein oder mehrere sich zumindest abschnittsweise in der Sicherheitszone der Schneidkontur befindliche Frühstege und/oder ein oder mehrere sich zumindest abschnittsweise in der Sicherheitszone der Schneidkontur befindliche Haltestege und/oder mindestens eine dem Halteteil entsprechende, sich zumindest abschnittsweise in der Sicherheitszone der Schneidkontur befindliche Schneidkontur, einer oder mehrerer weiterer Schneidkonturen geschnitten werden. Falls sich ein Haltesteg einer weiteren (zweiten) Schneidkontur in der Sicherheitszone der (ersten) Schneidkontur befindet, muss nicht der zum Haltesteg gehörige komplette Halteteil der weiteren (zweiten) Schneidkontur geschnitten werden. Es genügt, wenn der in der Sicherheitszone der (ersten) Schneidkontur befindliche Haltesteg der weiteren (zweiten) Schneidkontur geschnitten wird.
(IV) Bestimmen einer in Schritt (III) definierten Bearbeitungsreihenfolge zum Ausschneiden der Früh- und Halteteile, das heißt, es wird eine Bearbeitungsreihenfolge zum Ausschneiden der Früh- und Halteteile bestimmt, in welcher der Frühteil einer (ersten) Schneidkontur vor dem Halteteil der (ersten) Schneidkontur geschnitten wird, wobei vor dem Schneiden des Halteteils der (ersten) Schneidkontur ein oder mehrere sich zumindest abschnittsweise in der Sicherheitszone der (ersten) Schneidkontur befindliche Frühstege und/oder ein oder mehrere sich zumindest abschnittsweise in der Sicherheitszone der (ersten) Schneidkontur befindliche Haltestege und/oder mindestens eine dem Halteteil entsprechende, sich zumindest abschnittsweise in der Sicherheitszone der (ersten) Schneidkontur befindliche Schneidkontur, einer oder mehrerer weiterer (zweiter) Schneidkonturen geschnitten werden.
(V) Durchführen des Schneidprozesses für die Werkstückteile, wobei die Schneidkonturen in der in Schritt (IV) ermittelten Bearbeitungsreihenfolge geschnitten werden.

Erfindungsgemäß werden in Schritt (III) zur Auswahl eines einzigen Halteteils pro Schneidkontur die folgenden Schritte ausgeführt:
(III-1) Erstellen einer Knotenmenge, gegeben durch die Menge der Halteteile und/oder Haltestege,
(III-2) Erstellen eines gerichteten Graphen auf Basis der in Schritt (III-1) erstellten Knotenmenge, wobei der Graph einen oder mehrere Bögen umfasst, die jeweils einen ersten Knoten mit einem zweiten Knoten verbinden, derart, dass ein Bogen vom ersten Knoten zum zweiten Knoten gerichtet ist, falls sich der zum ersten Knoten gehörige Halteteil oder Haltesteg zumindest abschnittsweise in der Sicherheitszone der Schneidkontur des zum zweiten Knoten gehörigen Halteteils oder Haltestegs befindet.
(III-3) Auswählen eines azyklischen Teilgraphen aus dem in Schritt (III-2) erstellten gerichteten Graphen, derart, dass der azyklische Teilgraph zu jeder Schneidkontur genau einen Knoten, der zu einem Halteteil gehört, oder mindestens einen Knoten, der zu einem Haltesteg gehört, enthält.

Hier und im Weiteren bezeichnet der im Zusammenhang mit einer Sicherheitszone und einer Schneidkontur verwendete Ausdruck "zumindest abschnittsweise in der Sicherheitszone", dass die sich zumindest ein Schneidkonturabschnitt einer Schneidkontur, insbesondere die vollständige Schneidkontur, in der Sicherheitszone befindet.

Das erfindungsgemäße Verfahren kann für jeden Prozess zum thermischen Schneiden von Werkstückteilen eingesetzt werden, beispielsweise Laserschneiden oder Brennschneiden. Es ermöglicht, Kollisionen zwischen verkippten Werkstückteilen und Schneidkopf zuverlässig und sicher zu vermeiden. Die Werkstückteile können mit einer hohen Packungsdichte auf dem Werkstück angeordnet werden. Insbesondere können Werkstückteile mit einer hohen Präzision der Schnittkanten und kleinen Toleranzen hergestellt werden. Dies gilt auch für Werkstückteile die innerhalb eines anderen Werkstückteils auszuschneiden sind.

Bei einer vorteilhaften Ausgestaltung des erfindungsgemäßen Verfahrens wird die Bearbeitungsreihenfolge in Schritt (IV) so bestimmt, dass zumindest ein Werkstückteil freigeschnitten wird, bevor das Schneiden aller Frühteile der Schneidkonturen der Werkstückteile beendet ist. Ein wesentlicher Vorteil dieser Vorgehensweise liegt darin, dass schon vor dem Beenden des Schneidens der Frühteile Werkstückteile freigeschnitten werden, so dass im Falle einer während des Schneidprozesses auftretenden Störung bereits fertige Werkstückteile produziert sind und nicht das komplette Werkstück verworfen werden muss.

Bei einer weiteren vorteilhaften Ausgestaltung des erfindungsgemäßen Verfahrens werden die in Schritt (I) bestimmten Sicherheitszonen für die Schneidkonturen auf Basis einer, zu einer Auflageebene für das Werkstück parallelen, Querschnittfläche des Schneidkopfs bestimmt. Insbesondere kann die Sicherheitszone für eine Schneidkontur durch Bilden der Minkowski-Summe aus der Fläche der Schneidkontur und einer effektiven Querschnittfläche des Schneidkopfs, gegeben durch die Querschnittfläche des Schneidkopfs und einer festlegbaren Sicherheitsfläche, bestimmt werden. Die Sicherheitsfläche kann auch Null sein. Durch diese Maßnahme kann in vorteilhafter Weise die Sicherheitszone einer Schneidkontur sehr genau dimensioniert werden, so dass Werkstückteile mit einer besonders hohen Packungsdichte auf dem Werkstück angeordnet sein können.

Besonders vorteilhaft wird die Sicherheitszone für eine Schneidkontur in Abhängigkeit der Kipphöhe eines Werkstückteils relativ zu einer Auflageebene für das Werkstück und der Schneidhöhe des Schneidkopfs bestimmt. Im Ergebnis kann durch die besonders genaue Dimensionierung der Sicherheitszonen die Packungsdichte von Werkstückteilen auf dem Werkstück noch weiter erhöht werden.

Bei einer weiteren vorteilhaften Ausgestaltung des erfindungsgemäßen Verfahrens wird in Schritt (II) als Halteteil einer Schneidkontur die komplette Schneidkontur bestimmt, falls sich in der Sicherheitszone der Schneidkontur keine weitere Schneidkontur, insbesondere kein Schneidkonturabschnitt einer weiteren Schneidkontur, befindet. Hierdurch kann eine Vereinfachung und Beschleunigung des erfindungsgemäßen Verfahrens erreicht werden, da für eine Kollision zwischen verkipptem Werkstückteil und Schneidkopf unkritische Werkstückteile in einem Schneidvorgang komplett ausgeschnitten werden können.

Bei einer weiteren vorteilhaften Ausgestaltung des erfindungsgemäßen Verfahrens werden in Schritt (II) die Halte- und Frühteile einer Schneidkontur auf Basis einer zufälligen Auswahl bestimmt, falls sich in der Sicherheitszone der Schneidkontur zumindest eine weitere Schneidkontur, insbesondere ein Schneidkonturabschnitt zumindest einer weiteren Schneidkontur, befindet. Diese Maßnahme ermöglicht ein besonders einfaches Festlegen der Früh- und Halteteile.

Bei einer weiteren vorteilhaften Ausgestaltung des erfindungsgemäßen Verfahrens werden in Schritt (II) die Halte- und Frühteile einer Schneidkontur auf Basis vorgebbarer Faktoren bestimmt, falls sich in der Sicherheitszone der Schneidkontur zumindest eine weitere Schneidkontur, insbesondere ein Schneidkonturabschnitt zumindest einer weiteren Schneidkontur, befindet. Die Früh- und Halteteile können hierdurch prozessabhängig festgelegt werden, wodurch die Effizienz des Schneidprozesses verbessert werden kann. Besonders vorteilhaft wird in Schritt (IV) die Bearbeitungsreihenfolge zum Ausschneiden der Früh- und Halteteile bestimmt durch die folgenden Schritte:
(IV-1) Einfügen von Knoten für die Frühteile und/oder Frühstege der Schneidkonturen in den in Schritt (III-3) ausgewählten azyklischen Teilgraphen.
(IV-2) Einfügen von Bögen für die in Schritt (IV-1) eingefügten Knoten, die jeweils einen zum einem Frühteil oder Frühsteg gehörigen Knoten mit einem zu einem Halteteil oder Haltesteg gehörigen Knoten verbinden, derart, dass ein Bogen vom einen zum einem Frühteil oder Frühsteg gehörigen Knoten zu einem zu einem Halteteil oder Haltesteg gehörigen Knoten gerichtet ist, falls die beiden Knoten zur selben Schneidkontur gehören oder falls sich der Frühteil oder Frühsteg zumindest abschnittsweise in der Sicherheitszone des Halteteils oder Haltestegs befindet, zur Erstellung eines modifizierten azyklischen Teilgraphen.
(IV-3) Festlegen der Bearbeitungsreihenfolge durch topologisches Sortieren des in Schritt (IV-2) erstellten, modifizierten azyklischen Teilgraphen.

Diese Vorgehensweise stellt einen effizienten und zuverlässigen Algorithmus zur Auswahl eines einzigen Halteteils oder mindestens eines Haltestegs für jede Schneidkontur zur Verfügung, wobei es mindestens eine wie oben definierte Bearbeitungsreihenfolge zum Ausschneiden der Schneidkonturen gibt.

Das topologische Sortieren des modifizierten azyklischen Teilgraphen in Schritt (IV-3) kann generell willkürlich erfolgen. Besonders vorteilhaft erfolgt das topologische Sortieren des modifizierten azyklischen Teilgraphen auf Basis vorgebbarer Faktoren, beispielsweise Minimieren von Leerfahrten und/oder Minimierung offener Konturschnitte, wodurch die Effizienz des Verfahrens verbessert werden kann.

Bei einer weiteren vorteilhaften Ausgestaltung des erfindungsgemäßen Verfahrens werden die in Schritt (II) bestimmten Halteteile oder Haltestege der Schneidkonturen gewichtet, wobei in Schritt (III) die Gewichtung der Halteteile oder Haltestege berücksichtigt wird. Hierdurch kann die Effizienz des Verfahrens noch weiter verbessert werden.

Bei einer weiteren vorteilhaften Ausgestaltung des erfindungsgemäßen Verfahrens wird dann, wenn der in Schritt (III-2) erstellte Graph keinen azyklischen Teilgraphen enthält, der zu jeder Schneidkontur genau einen Knoten, der zu einem Halteteil gehört, oder mindestens einen Knoten, der zu einem Haltesteg gehört, enthält, die Lage und/oder Orientierung zumindest einer Schneidkontur relativ zu einer anderen Schnittkontur so verändert wird, dass ein azyklischer Teilgraph entsteht, der zu jeder Schneidkontur genau einen Knoten, der zu einem Halteteil gehört, oder mindestens einen Knoten, der zu einem Haltesteg gehört, enthält. Diese Maßnahme stellt sicher, dass durch das erfindungsgemäße Verfahren eine vollständige Bearbeitung aller Schneidkonturen eines Werkstücks auch bei Vorliegen eines Graphen, der keinen azyklischen Teilgraphen enthält, der zu jeder Schneidkontur genau einen Knoten, der zu einem Halteteil gehört, oder mindestens einen Knoten, der zu einem Haltesteg gehört, enthält, möglich ist.

Bei einer weiteren vorteilhaften Ausgestaltung des erfindungsgemäßen Verfahrens, die alternativ oder zusätzlich zu vorstehender Ausgestaltung anwendbar ist, wird dann, wenn der in Schritt (III-2) erstellte Graph keinen azyklischen Teilgraphen enthält, der zu jeder Schneidkontur genau einen Knoten, der zu einem Halteteil gehört, oder mindestens einen Knoten, der zu einem Haltesteg gehört, enthält, zumindest eine Schneidkontur mit wenigstens einem Microjoint versehen wird, derart, dass ein azyklischer Teilgraph, der zu jeder Schneidkontur genau einen Knoten, der zu einem Halteteil gehört, oder mindestens einen Knoten, der zu einem Haltesteg gehört, enthält, entsteht, wobei das zur Schneidkontur gehörende Werkstückteil nach Durchführen des Schneidprozesses für die übrigen Werkstückteile freigelegt wird. Auch diese Maßnahme stellt sicher, dass durch das erfindungsgemäße Verfahren eine vollständige Bearbeitung aller Schneidkonturen eines Werkstücks auch bei Vorliegen eines Graphen, der keinen azyklischen Teilgraphen enthält, der zu jeder Schneidkontur genau einen Knoten, der zu einem Halteteil gehört, oder mindestens einen Knoten, der zu einem Haltesteg gehört, enthält, möglich ist.

Ferner erstreckt sich die Erfindung auf einen Programmcode nach Anspruch 14 und einem Computerprogrammprodukt nach Anspruch 15.

Es versteht sich, dass die vorstehend genannten Ausgestaltungen der Erfindung in Alleinstellung oder in Kombination einsetzbar sind, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen:
- Fig. 1: eine schematische perspektivische Darstellung eine Laserschneidvorrichtung;
- Fig. 2: die Laserschneidvorrichtung von Fig. 1 mit einer auf die Werkstückauflage aufgelegten Blechtafel;
- Fig. 3: eine vergrößerte Detailansicht von Fig. 2 zur Veranschaulichung eines verkippten Blechteils;
- Fig. 4: eine perspektivische Darstellung eines Blechrohrs mit einem abgeschnittenen Blechteil;
- Fig. 5: eine perspektivische Darstellung des Blechrohrs von Fig. 4 mit verkipptem Blechteil;
- Fig. 6: ein Werkstück mit den Schneidkonturen von Werkstückteilen;
- Fig. 7: das Werkstück von Fig. 6, wobei für die Schneidkonturen beispielhaft Früh- und Halteteile bestimmt wurden;
- Fig. 8: das Werkstück von Fig. 6, wobei für die Schneidkonturen nochmals Früh- und Halteteile bestimmt wurden;
- Fig. 9: die Knotenmenge der Halteteile der Schneidkonturen des Werkstücks von Fig. 6 und 7 mit exemplarischen Knotengewichten;
- Fig. 10: Querschnittflächen eines Schneidkopfs auf verschiedenen Höhen;
- Fig. 11: eine schematische Darstellung zur Veranschaulichung der Kipphöhe eines Werkstückteils;
- Fig. 12: Minkowski-Summen aus den Flächen der Schneidkonturen, sowie der höhenabhängigen Querschnittfläche des Schneidkopfs und einer zusätzlichen Sicherheitsscheibe;
- Fig. 13: die Schneidkonturen des Werkstücks von Fig. 6 mit Sicherheitszonen;
- Fig. 14: eine Darstellung eines gerichteten Graphen auf Basis der der Knotenmenge von Fig. 9 mit exemplarischen Knotengewichten;
- Fig. 15: die Auswahl eines azyklischen Teilgraphen aus dem Graphen von Fig. 14 mit exemplarischen Knotengewichten;
- Fig. 16: das Hinzufügen eines Frühteils zum azyklischen Teilgraphen von Fig. 15 zur Erstellung eines modifizierten azyklischen Teilgraphen;
- Fig. 17: die Auswahl einer Bearbeitungsreihenfolge aus dem modifizierten azyklischen Teilgraphen von Fig. 16;
- Fig. 18: ein Werkstück mit vier Schneidkonturen, sowie Früh- und Halteteilen, deren Konstellation einen Zyklus der vierten Ordnung bedingt;
- Fig. 19: eine Umordnung einer Schneidkontur auf dem Werkstück von Fig. 18 zum Auflösen des Zyklus;
- Fig. 20: das Setzen eines Microjoints in einer Schneidkontur auf dem Werkstück von Fig. 18 zum Auflösen des Zyklus;
- Fig. 21: ein Flussdiagramm des erfindungsgemäßen Verfahrens.

### Ausführliche Beschreibung der Zeichnungen

Für die weiteren Betrachtungen werden in der Beschreibung der Erfindung verwendete Begriffe definiert:
Ein gerichteter Graph G ist ein Paar (V, A), wobei gilt:
- V ist eine endliche Menge, genannt die Knotenmenge von G,
- A ist Teilmenge von V × V, das heißt, Elemente von A sind geordnete Paare von Elementen von V, genannt die Bogenmenge von G.

Die Elemente von V werden Knoten des Graphen G genannt, und falls das Paar (v, w) in A enthalten ist, so gilt die Notation: "es gibt einen Bogen von v nach w". Ein gewichteter gerichteter Graph ist ein gerichteter Graph G zusammen mit einer Funktion w, die jedem Knoten v von G eine reelle Zahl w(v), das Gewicht von v, zuordnet. Ein Weg in einem gerichteten Graphen G = (V, A) ist eine Folge von Knoten v₁, ..., vₙ so dass (vᵢ, vᵢ₊₁) in A enthalten ist für jedes i zwischen 1 und n - 1. Ein Weg (vᵢ, ..., vₙ) heißt Zyklus, falls v₁ = vₙ. Ein gerichteter Graph heißt azyklisch, falls er keinen Zyklus enthält.

Sei G = (V, A) ein gerichteter Graph. Eine totale Ordnung < auf V heißt topologische Sortierung von G, wenn gilt: gibt es einen Bogen von v nach w, so gilt v < w. Anders betrachtet, ist eine topologische Sortierung eines Graphen G eine Auflistung v₁, ..., vₙ aller Knoten, so dass gilt: Ist (vᵢ, vⱼ) ein Bogen von G, so ist i < j.

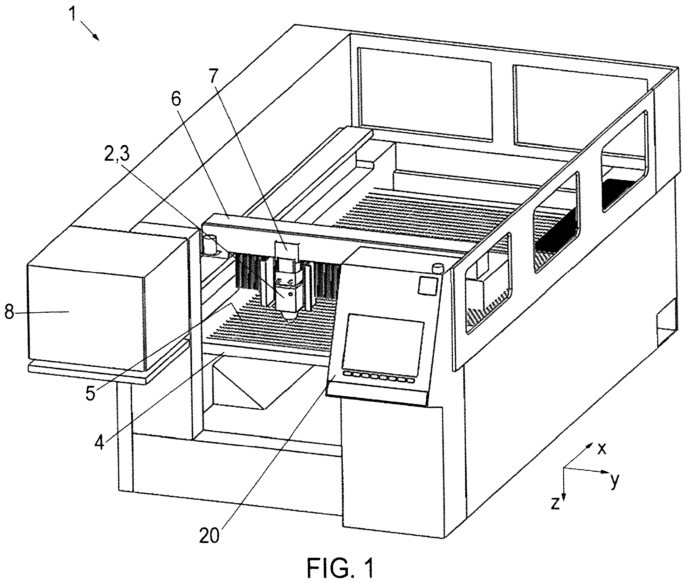

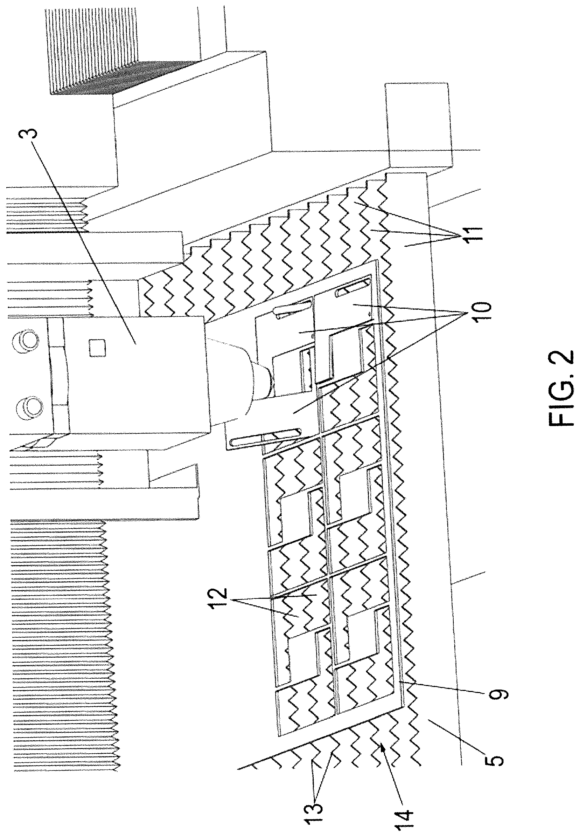

Sei zunächst Figur 1 betrachtet, worin eine an sich bekannte Laserschneidvorrichtung zum Schneiden von platten- oder rohrartigen Werkstücken veranschaulicht ist. Die insgesamt mit der Bezugszahl 1 bezeichnete Laserschneidvorrichtung umfasst eine Schneideinrichtung 2 mit einem Schneidkopf 3, sowie einen Arbeitstisch 4 mit einer Werkstückauflage 5 für ein Werkstück 9 (siehe Figuren 2 bis 5), beispielsweise eine Blechtafel oder ein Blechrohr. Die Werkstückauflage 5 wird von einem Querträger 6 überspannt, der in einer ersten Achsrichtung (x-Richtung) verfahrbar geführt ist. Am Querträger 6 ist ein Führungsschlitten 7 für den Schneidkopf 3 montiert, der am Querträger 5 entlang einer zweiten Achsrichtung (y-Richtung) verfahrbar geführt ist. Der Schneidkopf 3 kann somit in einer Ebene parallel zur Werkstückauflage 5 verfahren werden. Zudem kann der Schneidkopf 3 in einer dritten Achsrichtung (z-Richtung) höhenverfahrbar ausgebildet sein, um den Abstand senkrecht zu einem Werkstück 9 zu verändern.

Ein vom Schneidkopf 3 geführter Laserstrahl (nicht gezeigt) dient zur trennenden Bearbeitung des Werkstücks. Der Laserstrahl wird von einer Laserstrahlquelle 8 erzeugt und beispielsweise durch ein Strahlführungsrohr und mehrere Umlenkspiegel zum Schneidkopf 3 geführt. Über eine Fokussierlinse oder adaptive Optik kann ein gebündelter Laserstrahl auf das Werkstück gerichtet werden. Aufgrund der Verfahrbarkeit des Querträgers 6 in x-Richtung und des Führungsschlittens 7 in y-Richtung kann mit dem Laserstrahl jeder beliebige Punkt an einem Werkstück 9 angefahren werden. Ist der Schneidkopf 3 höhenverfahrbar, kann durch eine Änderung des Abstands zu einem Werkstück 9 die Fokuslage des Laserstrahls eingestellt werden. In Fokuslage ist durch den Abstand des Schneidkopfs 3 von einem Werkstück 9, beziehungsweise der weiter unten angegebenen Auflageebene 14, die Schneidhöhe des Schneidkopfs 3 gegeben. Der Abstand des Schneidkopfs 3 von einem Werkstück, insbesondere die Schneidhöhe, kann vor und während des Schneidprozesses eingestellt werden. Eine trennende Bearbeitung eines Werkstücks 9 kann insbesondere mit einer variablen Schneidhöhe innerhalb eines Schneidhöhenbereichs durchgeführt werden. Möglich ist auch, dass der Schneidkopf 3 nicht höhenverfahrbar ausgebildet ist und eine Änderung der Fokuslage des Laserstahls über optische Elemente im Schneidkopf 3, beispielsweise eine adaptive Optik, eingestellt wird. In diesem Fall ist durch den festen Abstand des Schneidkopfs 3 von einem Werkstück 9 die Schneidhöhe des Schneidkopfs 3 gegeben. Eine programmgesteuerte Steuereinrichtung 21 dient zur Steuerung/Regelung der trennenden Bearbeitung eines Werkstücks 9.

In Figur 2 ist die Werkstückauflage 5 mit einem beispielsweise als Blechtafel ausgebildeten Werkstück 9 vergrößert dargestellt. In dem gezeigten Ausführungsbeispiel wird die Werkstückauflage 5 durch eine Vielzahl von Auflageelementen 11 mit beispielsweise dreieckig ausgebildeten Tragpunktspitzen 13 gebildet, welche die oben erwähnte Auflageebene 14 für das zu bearbeitende Werkstück 9 definieren. Die Auflageelemente 11 sind hier beispielsweise als längliche Auflagestege ausgeführt, die mit einem beispielsweise konstanten Zwischenabstand nebeneinander liegend angeordnet sind, so dass zwischen zwei Auflageelementen 11 eine Vertiefung 12 gebildet wird. Die Auflageelemente 11 sind in einem vorbestimmten Raster angeordnet, so dass die Position der Tragpunktspitzen 13 ermittelt werden kann. Nicht näher dargestellt ist eine Absaugeinrichtung, durch welche während des Laserschneidens entstehender Schneidrauch, Schlackepartikel und kleine Abfallteile abgesaugt werden können.

Da die Werkstückauflage 5 das Werkstück 9 nicht vollflächig unterstützt, können frei geschnittene Werkstückteile 10 relativ zum Werkstück 9 beziehungsweise Auflageebene 14 verkippen. Ob ein ausgeschnittenes Werkstückteil 10 verkippt oder nicht, hängt von der Anzahl und den Positionen der das Werkstückteil 10 stützenden Tragpunktspitzen 13 ab. Ungeachtet dessen kann auch durch den Gasstrahldruck beim Laserschneiden das Verkippen eines Werkstückteils 10 verursacht sein. Insbesondere können ausgeschnittene Werkstückteile 10 in die Vertiefungen 12 zwischen den Auflageelemente 11 gelangen.

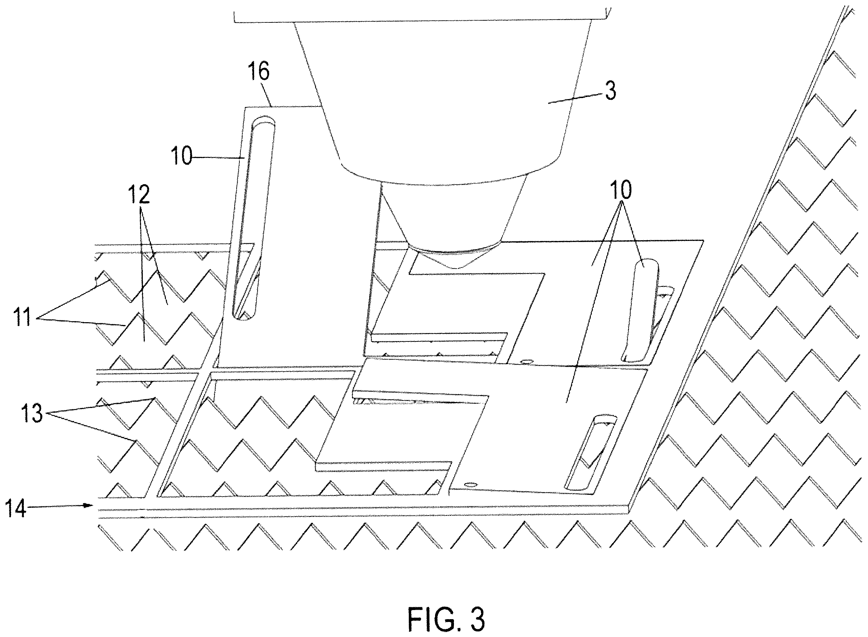

Wie in der vergrößerten Darstellung von Figur 3 veranschaulicht, kann ein nach oben verkipptes Werkstückteil 10 zu einer Kollision mit dem Schneidkopf 3 führen. Zwar kann ein Schneidkopf 3 mit einer entsprechenden Verfahrhöhe das verkippte Werkstückteil 10 überfahren, jedoch muss der Schneidkopf 3 häufig in einer relativ niedrigen Schneidhöhe positioniert werden, so dass eine Kollision bei einem hoch verkippten Werkstückteil 10 möglich ist. Entsprechendes gilt für einen nicht höhenverfahrbaren Schneidkopf 3, der sich stets in Schneidhöhe befindet. Somit hängt eine Kollision zwischen einem verkippten Werkstückteil 10 und dem Schneidkopf 3 von den Abmessungen des Schneidkopfs 3 in Schneidhöhe und der Kipphöhe des Werkstückteils 10 ab. In dem gezeigten Ausführungsbeispiel ragt ein Seitenrand 16 des rechteckigen Werkstückteils 10 nach oben. Ein gegenüberliegender Seitenrand steckt in einer Vertiefung 12. Der Schneidkopf 3 hat eine sich konisch verbreiternde Form mit einer kreisscheibenförmigen Querschnittfläche parallel zur Auflageebene 14. Demnach nimmt bei einer konstanten Höhe des Schneidkopfs 3 der Radius seiner Querschnittfläche mit vergrößertem Abstand von der Auflageebene 14 zu.

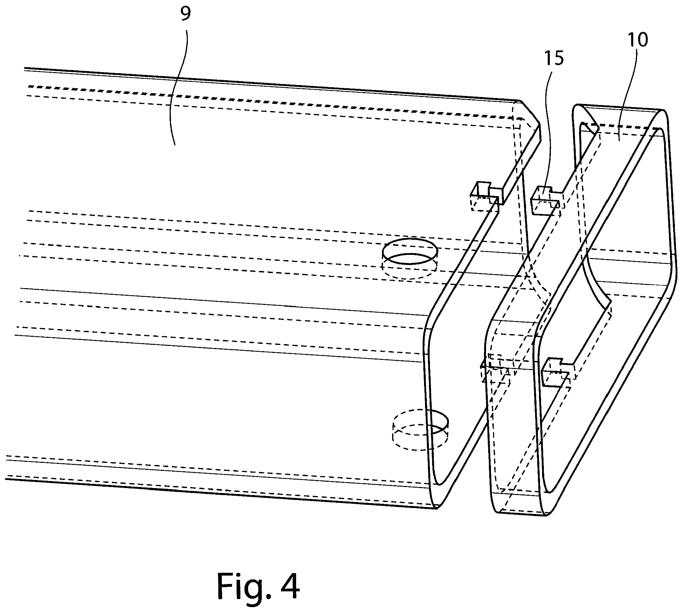

In Figur 4 ist als Werkstück 9 ein Blechrohr gezeigt, von dem ein Werkstück 10 abgeschnitten ist. Das Blechrohr weist an seinem oberen Rand einen hakenförmigen Fortsatz 15 auf.

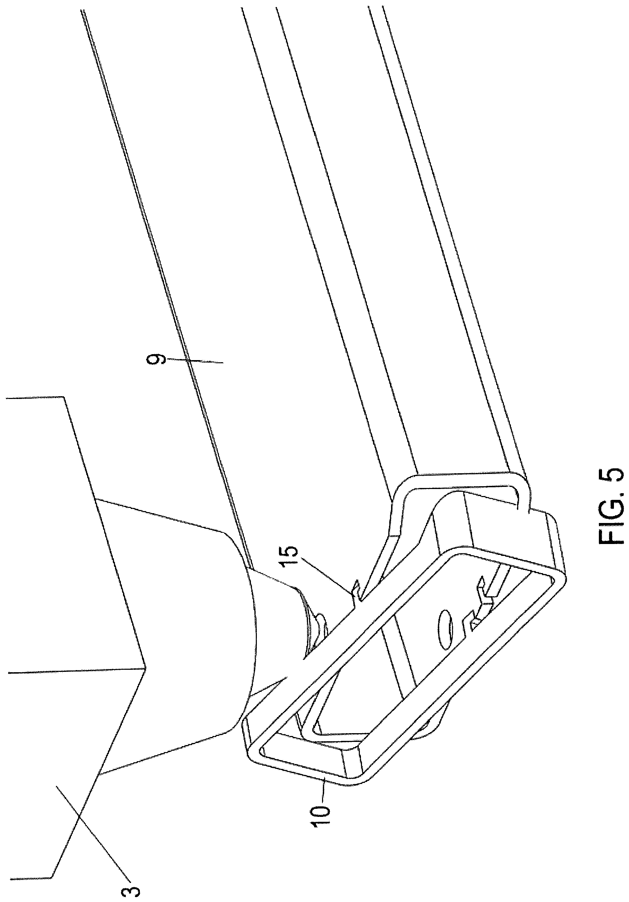

In Figur 5 ist der Schneidprozess an dem als Blechrohr ausgebildeten Werkstück 9 von Figur 4 veranschaulicht. Demnach kann eine Situation eintreten, bei der sich das freigeschnittene Werkstückteil 10 durch den Fortsatz 15 am übrigen Werkstück 10 verhakt und relativ zum Werkstück 10 verkippt. Hierdurch kann eine Kollision zwischen dem in Schneidhöhe befindlichen Schneidkopf 3 und dem verkippten Werkstückteil 10 auftreten.

Durch das erfindungsgemäße Verfahren kann eine Kollision des Schneidkopfs 3 mit einem verkippten Werkstückteil 10 vermieden werden. Das Verfahren wird im Weiteren in allgemeiner Weise anhand eines plattenförmigen Werkstücks 9, beispielsweise die in den Figuren 2 und 3 gezeigte Blechtafel, beschrieben, wobei es sich versteht, dass das Verfahren gleichermaßen für ein rohrförmiges Werkstück 9, beispielsweise das in den Figuren 4 und 5 gezeigte Blechrohr, einsetzbar ist.

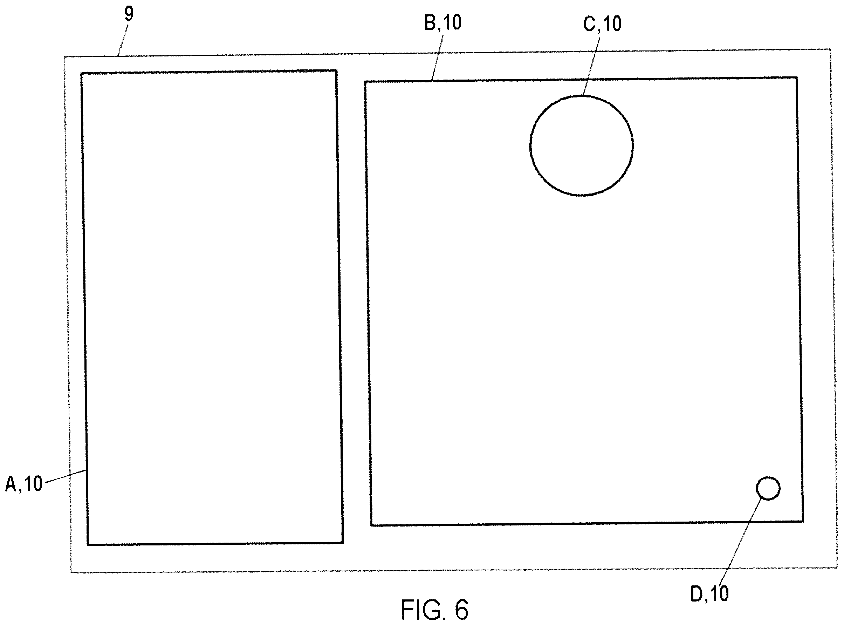

Sei zunächst Figur 6 betrachtet, worin das Werkstück 9 mit beispielhaften Schneidkonturen für freizuschneidende Werkstückteile 10 gezeigt ist. Zur leichteren Bezugnahme sind die Schneidkonturen mit den Buchstaben A, B, C und D bezeichnet, wobei die Schneidkonturen A-D den freizuschneidenden Werkstückteilen 10 entsprechen. Demnach handelt es sich um zwei seitlich nebeneinander liegende, rechteckige Schneidkonturen A, B und zwei kreisförmige Schneidkonturen C, D innerhalb der Schneidkontur B.

Das Verfahren zur trennenden Bearbeitung des Werkstücks 9 umfasst die folgenden Schritte, welche nicht notwendig in dieser Reihenfolge abzuarbeiten sind:
- Bestimmen von Halteteilen für die Schneidkonturen, insbesondere Auftrennen der Schneidkonturen in Früh- und Halteteile, und optional Gewichtung der Halteteile,
- Erstellen eines gerichteten (Abhängigkeits-)Graphen der gewichteten Halteteile,
- Bestimmung einer azyklischen Auswahl aus dem gerichteten Graphen,
- Einfügen der Frühteile in den gerichteten Graphen,
- Ermittlung einer Bearbeitungsreihenfolge zum Schneiden der Früh- und Halteteile der Scheidkonturen der Werkstückteile,
- optional Anwenden des Teilverfahrens "kollisionsbereinigendes Umordnen",
- optional Anwenden des Teilverfahrens "prozessoptimaler Microjoint".

Hier und im Weiteren wird mit dem Begriff "Auftrennmöglichkeit" die Partitionierung einer Schneidkontur in beliebig viele zusammenhängende Teilstücke bezeichnet. Eine nichtleere Teilmenge dieser Teilstücke definiert den Halteteil der Schneidkontur. Der Halteteil kann ein oder mehrere Teilstücke enthalten, die als Haltekonturen bzw. Haltestege bezeichnet werden. Jedes Teilstück einer Auftrennmöglichkeit, welches nicht zum Halteteil gehört, wird als Frühschnitt oder Frühkontur bezeichnet. Die Menge aller Frühkonturen ergibt den Frühteil.

Zunächst wird für jede Schneidkontur A-D mindestens ein Halteteil bestimmt, wobei für jede Schneidkontur A-D mindestens eine Auftrennmöglichkeit ermittelt wird. In der Regel werden für jede Schneidkontur A-D mehrere Auftrennmöglichkeiten ermittelt. Eine Auftrennmöglichkeit umfasst auch den Trivialfall, bei dem keine Auftrennung erfolgt und die Schneidkontur als Ganzes belassen wird. In diesem Fall ist der Halteteil durch die komplette Schneidkontur gegeben und es existiert keine Frühkontur.

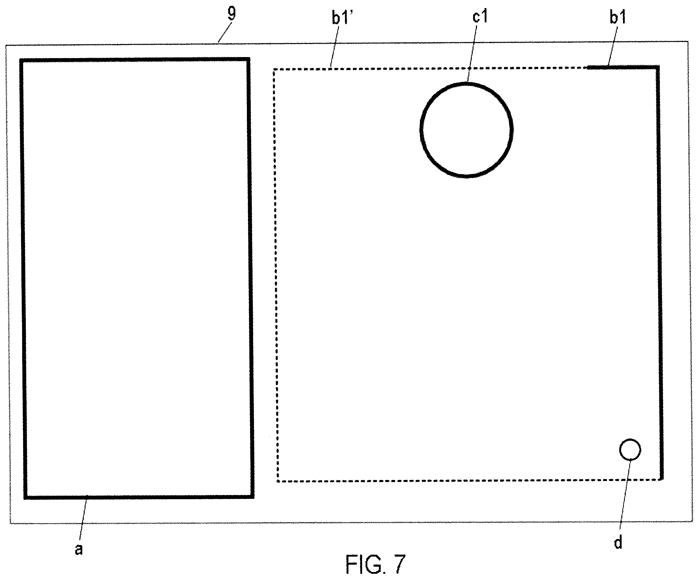

In Figur 7 sind beispielhaft Auftrennmöglichkeiten für die Schneidkonturen A-D dargestellt. Der Halteteil ist jeweils mit dickeren, durchgezogenen Linien, der Frühteil jeweils mit dünneren, gestrichelten Linien dargestellt. Demnach wird die Schneidkontur A nicht aufgetrennt (Trivialfall), so dass deren Halteteil a durch die komplette Schneidkontur A gegeben ist und kein Frühteil existiert. Die Schneidkontur B wird aufgetrennt in einen rechtwinkligen Halteteil b1, bestehend aus einem Haltesteg, und einen hierzu komplementären Frühteil b1'. Die Schneidkontur C wird nicht aufgetrennt (Trivialfall), so dass deren Halteteil c durch die komplette Schneidkontur C gegeben ist. Die Schneidkontur D wird ebenfalls nicht aufgetrennt (Trivialfall), so dass deren Halteteil d durch die komplette Schneidkontur D gegeben ist.

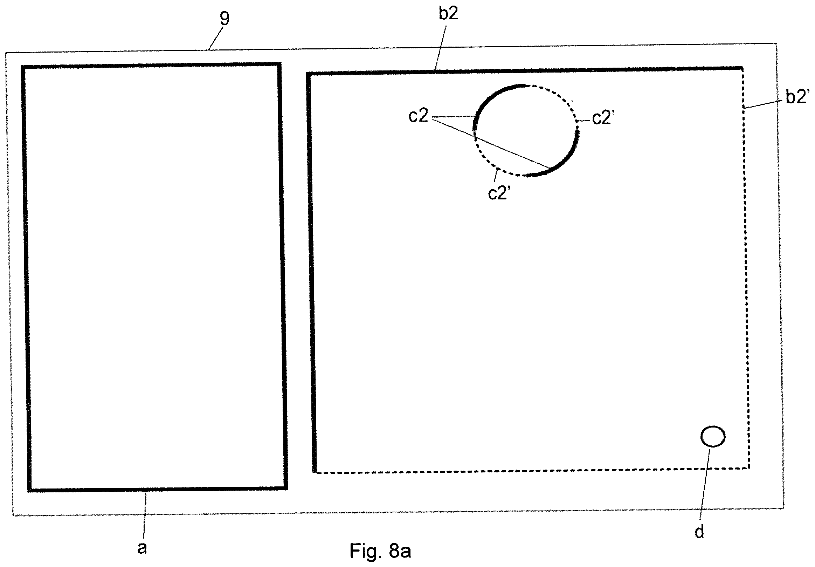

Figur 8a zeigt beispielhaft weitere Auftrennmöglichkeiten für die Schneidkonturen A-D. Demnach wird die Schneidkontur A wie in Figur 7 nicht aufgetrennt (Trivialfall), so dass der Halteteil a durch die komplette Schneidkontur A gegeben ist. Die Schneidkontur B wird aufgetrennt in einen rechtwinkligen Halteteil b2, bestehend aus einem Haltesteg, und einen hierzu komplementären Frühteil b2'. Die Schneidkontur C wird aufgetrennt in einen Halteteil c2 mit zwei Kreissegmenten und einen Frühteil c2' mit zwei komplementären Kreissegmenten. Die Schneidkontur D wird nicht aufgetrennt (Trivialfall), wobei der Halteteil d durch die komplette Schneidkontur D gegeben ist.

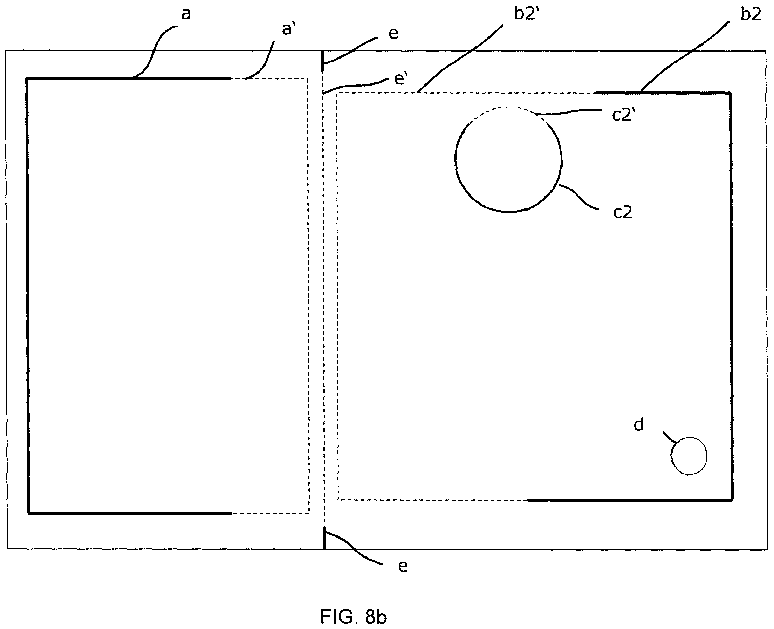

Fig. 8b zeigt das Werkstück 9, wobei neben den in Fig. 8a gezeigten Schneidkonturen A-D ein Tafeltrennschnitt E vorgesehen ist. Tafeltrennschnitte werden beispielsweise zum Zerkleinern des Restgitters des Werkstücks verwendet. In der Praxis nutzt man Tafeltrennschnitte, um das Vereinzeln der Werkstückteile, sowie das Schrotthandling zu verbessern. Der Tafeltrennschnitt E wird als Schneidkontur E bezeichnet und bildet zusammen mit den Außenkonturen des Werkstücks 9 im vorliegenden Beispiel zwei umfängliche Konturen. Im gezeigten Beispiel umfasst die Schneidkontur E Halteteile e und ein Frühteil e', welche genauso zu behandeln sind wie die Halteteile a-d und die Frühteile a', b2', c2' der anderen Schneidkonturen A-D. Darüber hinaus können auch Innengeometrietrennschnitte vorgesehen sein, also Trennschnitte, die sich nicht bis zur Außenkontur des Werkstücks 9 erstrecken (nicht gezeigt), um Innengeometrien (z.B. Bohrungen) zu zerkleinern, damit das Innengeometriestück klein genug wird um als Schrott durch die Auflagestege zu fallen oder entsprechend durch eine Vorrichtung (z.B. Kleinteileklappe) entsorgt zu werden. Derartige Innenkonturen bilden ebenfalls Schneidkonturen gemäß der Erfindung, können also Halteteile und Frühteile umfassen und gemäß dem erfindungsgemäßen Verfahren behandelt werden.

In einer Ausführungsvariante erfolgt die Auswahl der Auftrennmöglichkeiten der Schneidkonturen A-E auf zufälliger Basis, wobei beispielsweise ein Zufallsgenerator die Auftrennmöglichkeiten festlegt.

In einer alternativen Variante erfolgt die Auswahl der Anzahl und Art der Auftrennmöglichkeiten prozessabhängig. Um Kollisionssicherheit als auch höchste Bauteilgenauigkeit sicherzustellen kann es insbesondere vorteilhaft sein, bei der endgültigen Abarbeitungsreihenfolge die Frühteile e' bzw. Halteteile e des Trennschnitts E im Rahmen des vorgestellten Verfahrens so spät wie möglich zu schneiden.

Folgende Faktoren können beispielsweise Einfluss auf die Art der Auftrennmöglichkeiten haben:
- Schneidprozesstyp und dessen Einstellungen,
- Werkstückteilbeschaffenheit, beispielsweise Gewicht, Größe, Umfang, Material, Toleranzen,
- Konturbeschaffenheit, beispielsweise Länge, Art, Krümmung, Differenzierbarkeit,
- Spezielle Anwendungskriterien des Werkstückteils, beispielsweise Nichtsichtbarkeit oder Sichtbarkeit bestimmter Teile der Kontur,
- Sicherstellung einer durchgehend prozesssicheren Befestigung des Werkstückteils im Restgitter durch den Halteteil, beispielsweise Mindestlängen für den Halteteil in Abhängigkeit von Merkmalen des Werkstückteils, Mindestanzahl an Teilstücken im Halteteil in Abhängigkeit von Merkmalen des Werkstückteils.

Für die Anzahl der Auftrennmöglichkeiten können beispielsweise folgende Faktoren Einfluss haben:
- Komplexität der auf diesem Schritt aufbauenden Schritte und deren computergestützte Berechenbarkeit,
- Geschwindigkeit und Komplexität des Verfahrens,
- Relevanz der Kontur aus dem Blickwinkel der Kollisionsgefahr im Hinblick auf die Beschaffenheit des zur Kontur gehörigen Werkstückteils sowie benachbarter Konturen und deren zugehörige Werkstückteile,
- Ablauf der auf diesem Schritt aufbauenden Schritte und mögliche Verbesserung deren Resultate.

Im Anschluss hieran wird (optional) jeder Auftrennmöglichkeit beziehungsweise jedem Halteteil ein Gewicht zugeordnet, wobei ein höheres Gewicht einer stärker bevorzugten Auftrennung entspricht. Um eine bestimmte Auftrennung zu erzwingen oder auszuschließen, können die Gewichte ∞ beziehungsweise -∞ verwendet werden.

Die Gewichtung der Auftrennmöglichkeiten kann beispielsweise auf folgenden Faktoren basieren:
- Größe des Halteteils (ein großer Halteteil kann für die Abarbeitung vorteilhaft sein),
- Platzierung der Auftrennpunkte an für das Schneidverfahren günstigen Stellen, beispielsweise nichtdifferenzierbare Punkte oder Punkte mit besonders hoher oder niedriger Krümmung,
- Platzierung der Auftrennpunkte an Punkten, die für das Werkstückteil von Vorteil sind, beispielsweise spätere Schweißpunkte, nicht-sichtbare Teilkonturen, Teilkonturen, bei denen eine Nachbearbeitung vorgesehen ist oder weit auseinander liegende Punkte,
- Platzierung der Auftrennpunkte an für das Verkippen von Werkstückteilen günstigen Positionen, beispielsweise nahe dem Schwerpunkt eines Werkstückteils oder an Stellen, wo schneidprozessbedingtes Gas nur flächenmäßig wenig auf das Werkstückteil auftrifft.

Es wurden für jede Schneidkontur Auftrennmöglichkeiten zusammen mit Gewichten für die Auftrennmöglichkeiten beziehungsweise Halteteile bestimmt.

Anschließend wird aus den gewichteten Auftrennmöglichkeiten beziehungsweise Halteteilen ein gerichteter Graph G = (V, A) mit Knotengewichten konstruiert. V ist hierbei die Knotenmenge des gerichteten Graphen G und A dessen Bogenmenge. Im konkreten Fall ist die Knotenmenge des Graphen gegeben durch die Menge aller Halteteile, die für alle Schneidkonturen bestimmt wurden. Jedem Knoten wird ein Gewicht zugeordnet, das durch das Gewicht der zugehörigen Auftrennmöglichkeit gegeben ist. Da für jede Schneidkontur mehrere Auftrennmöglichkeiten bestimmt worden sein können, enthält der Graph G in der Regel für die meisten Schneidkonturen mehrere Knoten. Allgemein kann die Knotenmenge aus Halteteilen und/oder Haltestegen erstellt werden.

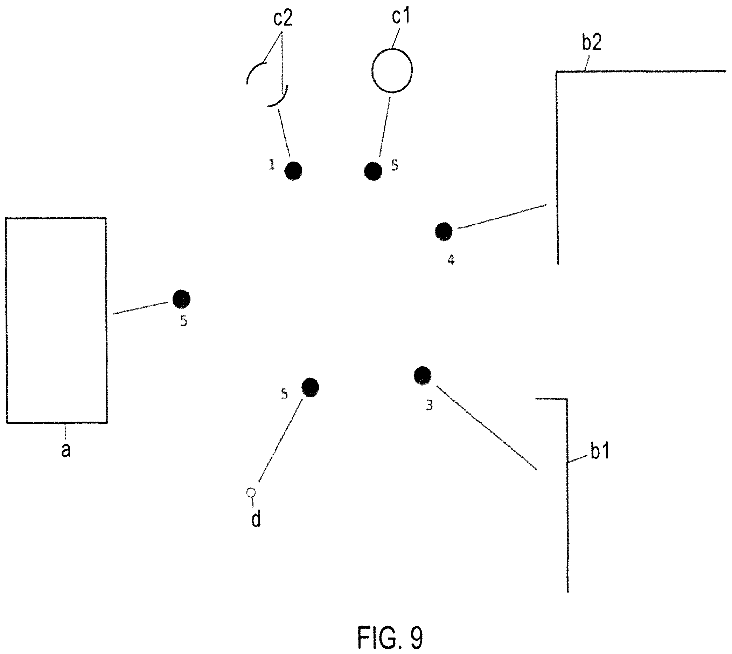

Figur 9 zeigt eine Skizze der so erzeugten Knotenmenge V mit beispielhaften Knotengewichten, die neben den als gefüllte Kreise dargestellten Knoten angeführt sind. Die zu den jeweiligen Knoten gehörenden Halteteile sind eingezeichnet. Demnach gibt es für die Schneidkontur A einen Knoten für den Halteteil a mit einem Gewicht 5. Für die Schneidkontur B gibt es entsprechend der beiden Auftrennmöglichkeiten einen Knoten für den Halteteil b1 und einen Knoten für den Halteteil b2, wobei dem Halteteil b1 das Gewicht 3 und dem Halteteil b2 das Gewicht 4 zugeordnet wird. Für die Schneidkontur C gibt es entsprechend der beiden Auftrennmöglichkeiten einen Knoten für den Halteteil c1 und einen Knoten für die den Halteteil c2, wobei dem Halteteil c1 das Gewicht 5 und dem Halteteil c2 das Gewicht 1 zugeordnet wird. Für die Schneidkontur D gibt es einen Knoten für den Halteteil d mit einem Gewicht 5.

Um die Bögen des gerichteten Graphen G zu definieren, welche Abhängigkeiten in der Schneidreihenfolge repräsentieren, wird eine Funktion S verwendet, die jeder Schneidkontur K eine Sicherheitszone S(K, p) zuweist, wobei p der Punkt ist, in dem das zur Schneidkontur K gehörige Werkstückteil freigeschnitten werden soll.

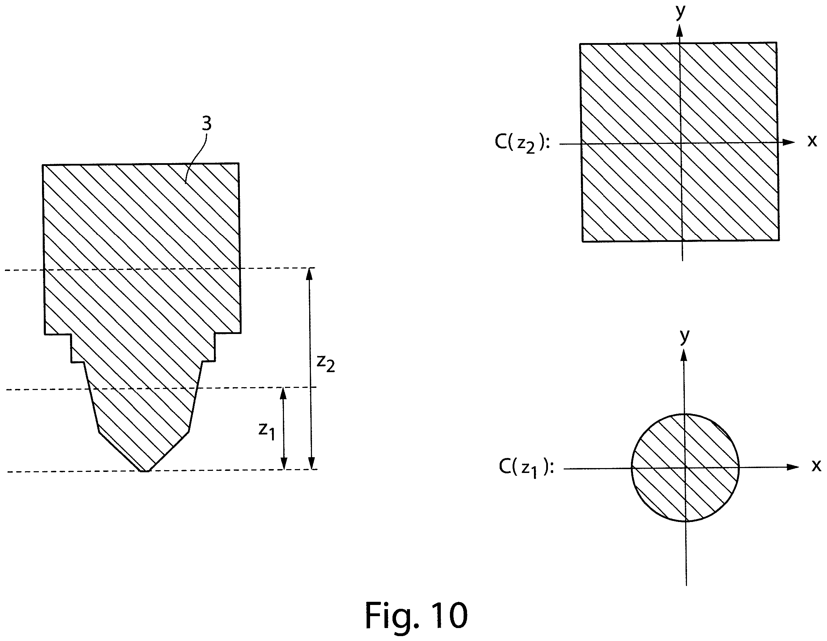

Zunächst wird eine Funktion C definiert, die jeder Höhenangabe z die Menge der Punkte im Querschnitt des Schneidkopfs C(z) auf Höhe z zuordnet. Figur 10 veranschaulicht beispielhaft einen Schneidkopf 3 mit veränderlicher Schneidkopfquerschnittfläche parallel zum ebenen Werkstück 9 beziehungsweise zur Auflageebene 14, wie in der Beschreibung von Figur 2 angegeben. Konkret umfasst der Schneidkopf 3 einen oberen quaderförmigen Abschnitt, nach unten hin anschließend, einen zylinderförmigen Abschnitt und daran anschließend, zwei nach unten hin konisch zulaufende, kegelstumpfförmige Abschnitte. In Figur 10 sind beispielhaft die Querschnittflächen C(z₁) und C(z₂) des Schneidkopfs 3 für die Höhen z₁ und z₂ angegeben. Zudem wird ein Sicherheitsabstand um den Schneidkopf 3 definiert, der hier beispielsweise als Sicherheitsradius durch eine Kreisscheibe Dᵣ mit dem Radius r gegeben ist.

Im Weiteren seien mit A + B die Minkowski-Summe der Mengen A und B bezeichnet, r ist der zusätzliche Sicherheitsradius und I die von der Schneidkontur K eingeschlossene Fläche (gleich dem auszuschneidenden Werkstückteil). Folgende Werte für die Sicherheitszone S(K, p) sind beispielsweise sinnvoll:
- S(K, p) = I + C(h(K, p)) + Dᵣ, wobei die Funktion h der Schneidkontur K eine maximale Verkipphöhe h(K, p) zuordnet, unter der Annahme, dass die Schneidkontur K im Punkt p freigeschnitten wird. Die Funktion h(K, p) wird weiter unten näher erläutert.
- S(K, p) = conv(I) + C(h(K, p)) + Dᵣ, wobei conv(I) die konvexe Hülle von I bezeichnet. Dies ist sinnvoll, wenn das zur Schneidkontur K gehörige Werkstückteil konkave Stellen aufweist und es möglich ist, dass es weit aufsteht.
- andere Werte für S(K), die durch zusätzliche Informationen genauere Vorhersagen für ein mögliches Verkippen des Werkstückteils 10 treffen können. Beispielsweise kann bei rohrförmigen Werkstücken über die Drehposition des Rohrs und die damit bekannte Richtung der Gravitationskraft die Kipphöhe eines Werkstückteils 10 vorhergesagt werden.

Die maximale Verkipphöhe h(K, p) einer Schneidkontur K kann als konstant gewählt werden, wenn der Schneidprozess die Annahme rechtfertigt, dass freigeschnittene Werkstückteile 10 nur geringfügig beziehungsweise höchstens eine bestimmte Höhe aufstehen werden. Ist diese Annahme nicht gerechtfertigt, so kann die maximale Verkipphöhe h(K, p) abhängig von der Schneidkonturgeometrie definiert werden. Simple Abschätzungen sind hierbei, dass für kleine Schneidkonturen die maximale Verkipphöhe durch die maximale Abmessung der Schneidkontur beschränkt ist. Im Gegenzug kann ab einer gewissen Schneidkonturgröße und mit dem Wissen über die maximale Distanz der das Werkstück tragenden Auflageelemente 11 ein Verkippen ganz ausgeschlossen werden, so dass die maximale Verkipphöhe auf 0 gesetzt werden kann.

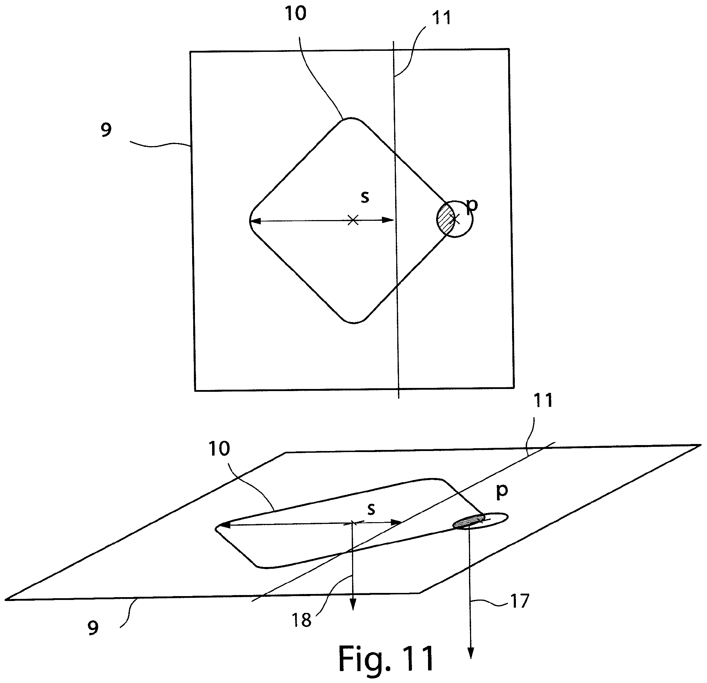

Ist die genaue Information über die Auflageelemente 11 bekannt, so kann mit den beiden für das Verkippen eines Werkstückteils 10 hauptsächlich verantwortlichen Größen, nämlich der Gewichtskraft des freigeschnittenen Werkstückteils 10 sowie der beim Schneiden auf das Werkstück 9 im Punkt p durch den Schneidgasdruck eingebrachten Kraft, die Verkipphöhe des Werkstückteils berechnet werden. Dies wird in Verbindung mit Figur 11 näher erläutert. Figur 11 zeigt zweimal das gleiche Werkstück 9 mit einem rechteckförmigen Werkstückteil 10 bzw. Schneidkontur mit gerundeten Ecken in der Aufsicht (oben) sowie in einer Schrägansicht (unten). Mit s ist der Schwerpunkt des Werkstückteils 10 bezeichnet, p gibt den Punkt an, in dem das Werkstückteil 10 freigeschnitten wird. In dem gezeigten Beispiel ist der Abstand der Punkte s und p zum Auflageelement (Auflagesteg) 11 in etwa gleich. Es sei angenommen, dass die aus dem Gasdruck des Schneidgases resultierende Gasdruckkraft 17 größer ist als die Gewichtskraft 18 des Werkstückteils 10. Dadurch kippt das Werkstückteil im Punkt p, der sich auf der einen Seite des Auflageelements 11 befindet, nach unten und die maximale Verkipphöhe h ergibt sich als Abstand des am weitesten vom Auflageelement 11 entfernten Punkts des Werkstückteils 10, der sich auf der anderen Seite des Auflageelements 11 befindet. Wäre die Gewichtskraft 18 größer als die Gasdruckkraft 17, wäre die maximale Verkipphöhe durch den Abstand des Punkts p zum Auflageelement 11 gegeben.

Ist die genaue Auflagesteginformation nicht bekannt, so kann die vorherige Überlegung für beliebig viele mögliche Positionen eines oder mehrerer Auflageelemente 11 durchgeführt und die höchstmögliche so ermittelte Verkipphöhe als Wert für h(K, p) gewählt werden.

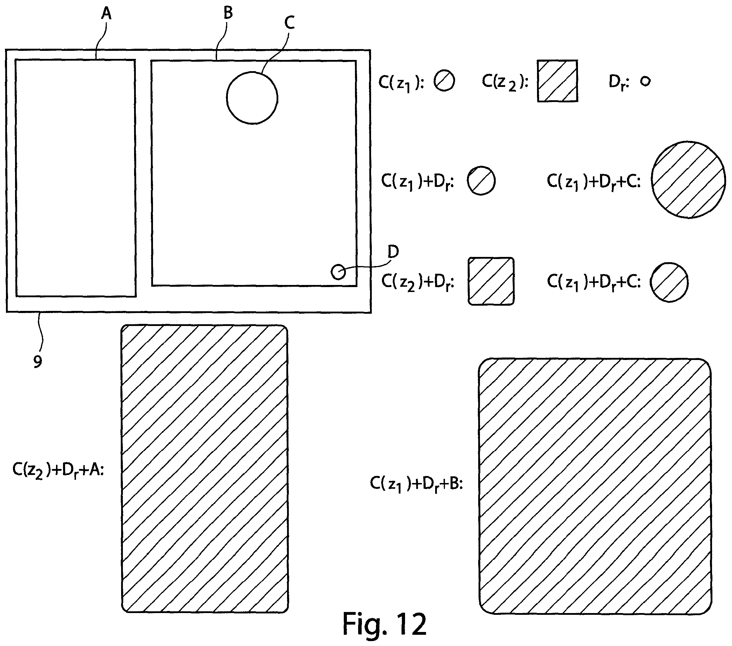

In Figur 12 sind das Werkstück 9 mit den Schneidkonturen A-D sowie die Querschnittfläche C(z₁) des Schneidkopfs 3 auf Höhe z₁, die Querschnittfläche C(z₂) des Schneidkopfs 3 auf Höhe z₂, und die Querschnittfläche der Sicherheitsscheibe Dᵣ mit Radius r gezeigt. Ferner sind die aus der tatsächlichen Querschnittfläche C(z₁) beziehungsweise C(z₂) des Schneidkopfs 3 und der Sicherheitsscheibe Dᵣ durch Berechnung der jeweiligen Minkowski-Summen resultierenden effektiven Querschnittflächen für den Schneidkopf 3 angegeben: C(z₁) + Dᵣ sowie C(z₂) + Dᵣ. Für die Schneidkonturen A-D sind durch Berechnung der jeweiligen Minkowski-Summen die Sicherheitszonen S für die Schneidkonturen A-D angegeben: Schneidkontur A: S = C(z₂) + Dᵣ + A, Schneidkontur B: S = C(z₁) + Dᵣ + B, Schneidkontur C: S = C(z₁) + Dᵣ + C, Schneidkontur D: S = C(z₁) + Dᵣ + D.

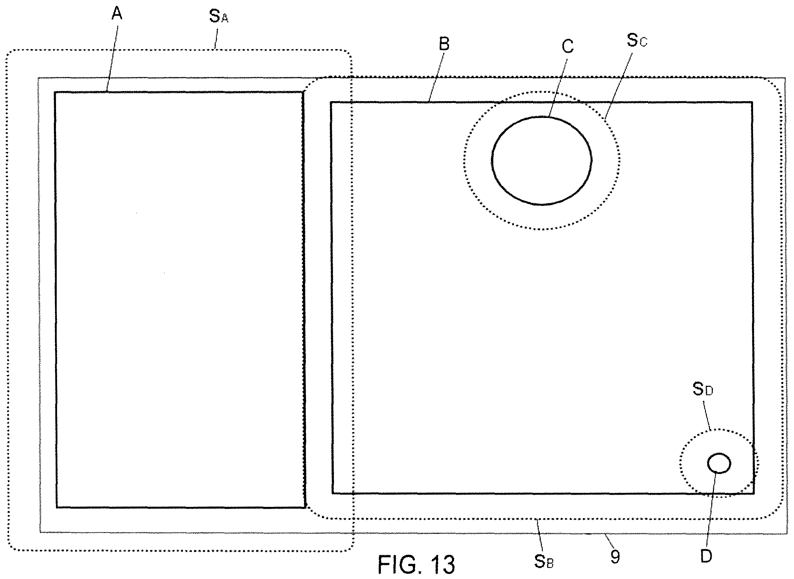

Figur 13 zeigt das Werkstück 9 mit den Schneidkonturen A-D, um welche die auf diese Weise ermittelten Sicherheitszonen S gestrichelt eingezeichnet sind. Aus Gründen der Einfachheit wurde davon ausgegangen, die Kipphöhenfunktion h nicht vom Punkt, in dem ein Werkstückteil freigelegt wird, abhängt. Es wurde angenommen, dass das zur Schneidkontur A gehörende Werkstückteil 10 eine maximale Kipphöhe von z₂ hat (h(Schneidkontur A) = z₂). Für alle anderen Werkstückteile wurde eine maximale Kipphöhe von z₁ angenommen. Daraus ergibt sich, dass die Sicherheitszonen S den in Figur 12 dargestellten Minkowski-Summen entsprechen.

Außerdem werden nur Schneidkonturen als kollisionsgefährlich angesehen, die relevant sind. Dieses Vorgehen ist optional, das heißt, es können auch alle Schneidkonturen als relevant betrachtet werden. Wenn relevante und irrelevante Schneidkonturen betrachtet werden, kann die Relevanz einer Schneidkontur durch schneidprozesstechnische, material- und werkstückabhängige oder andere Faktoren bestimmt sein. Folgende Faktoren sind beispielsweise mögliche Kriterien, an denen Relevanz festgemacht werden kann:
- Abmessungen des Werkstückteils
- verwendetes Material,
- Materialdicke,
- Schneidprozess,
- verwendetes Auflagesystem.

Im Folgenden wird beispielhaft zwischen relevanten und irrelevanten Schneidkonturen unterschieden, wobei wie bereits ausgeführt, alle Schneidkonturen als relevant angesehen werden können.

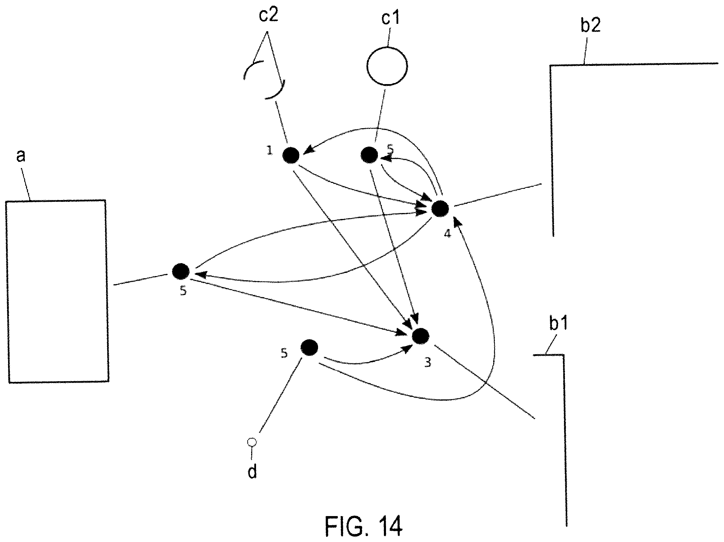

Figur 14 veranschaulicht beispielhaft einen aus der in Figur 9 gezeigten Knotenmenge V erstellten gerichteten Graphen G, wobei Bögen zwischen jeweils zwei Knoten (= Halteteile) eingefügt wurden. Hierbei gilt für zwei verschiedene Knoten u und v des gerichteten Graphen G, dass ein Bogen von u nach v geht, wenn folgende Bedingung erfüllt ist:
Sei K die zum Knoten v gehörige Schneidkontur. Dann ist K eine relevante Schneidkontur und die beiden Punktemengen S(K, p) und u haben einen nichtleeren Schnitt. Hierbei ist p der Punkt, in dem die Schneidkontur K beim Schneiden von v zu Ende geschnitten wird, das heißt, in dem das zur Schneidkontur K gehörige Werkstückteil 10 freigeschnitten wird. Der Punkt p ist ein Endpunkt einer der Haltestege im Halteteil von v. Wenn ein Bogen von Knoten u nach Knoten v geht, bedeutet dies, dass verlangt wird, dass das zum Knoten u gehörende Halteteil vor dem zum Knoten v gehörenden Halteteil geschnitten wird. Demnach muss der Halteteil des Knotens u vor dem Halteteil des Knotens v geschnitten werden, wenn sich in der Sicherheitszone der Schneidkontur K des Knotens v der Halteteil des Knotens u befindet.

Die Idee dahinter ist folgende: Wenn der Halteteil des Knotens v geschnitten wird, das zum Knoten v gehörige Werkstückteil also freigelegt wird, könnte dieses verkippen. Das Schneiden von v endet im Punkt p. Die maximale Verkipphöhe des Werkstückteils ist gegeben durch h(K, p), wobei K die Schneidkontur des Werkstückteils 10 ist. Müsste jetzt noch das zum Knoten u gehörige Werkstückteil 10 geschnitten werden, so würde, da S(K, p) und u einen nichtleeren Schnitt besitzen, sich der Schneidkopf zu irgendeinem Zeitpunkt an einem Punkt in dieser Schnittmenge befinden, so dass ein Kollisionsrisiko zwischen Schneidkopf 3 und dem verkippten Werkstückteil 10 bestünde. Durch die Forderung, dass u vor v geschnitten werden muss, wird dieses Risiko ausgeschlossen.

Ist es durch das Schneidverfahren bedingt, dass ein erstes Werkstückteil in einem zweiten Werkstückteil liegt, so dass das erste Werkstückteil vor dem zweiten Werkstückteil geschnitten werden muss, wird ein Bogen von u nach v hinzu gefügt, falls gilt, dass die zum Knoten u gehörige Schneidkontur in der zum Knoten v gehörigen Schneidkontur enthalten ist. Es wird angemerkt, dass diese Bedingung für die genannte Funktion S nur dann von Bedeutung ist, falls die zum Knoten v gehörige Schneidkontur nicht relevant ist. Für die oben beschriebene Funktion S enthält S(K, p) stets das zur Schneidkontur K gehörige Werkstück selbst. Damit ist bereits durch die vorherigen Bedingungen ein Bogen vorhanden, wenn die zum Knoten v gehörige Schneidkontur relevant ist.

Für den in Figur 14 gezeigten Graphen G wird die Schneidkontur D als nicht relevant angesehen. Dies führt dazu, dass kein Bogen vom dem Knoten des Halteteils b1 zum Knoten des Halteteils d geht. Wäre die zu Halteteil d gehörige Schneidkontur relevant, würde so ein Bogen vorliegen. Alle anderen Schneidkonturen werden als relevant betrachtet.

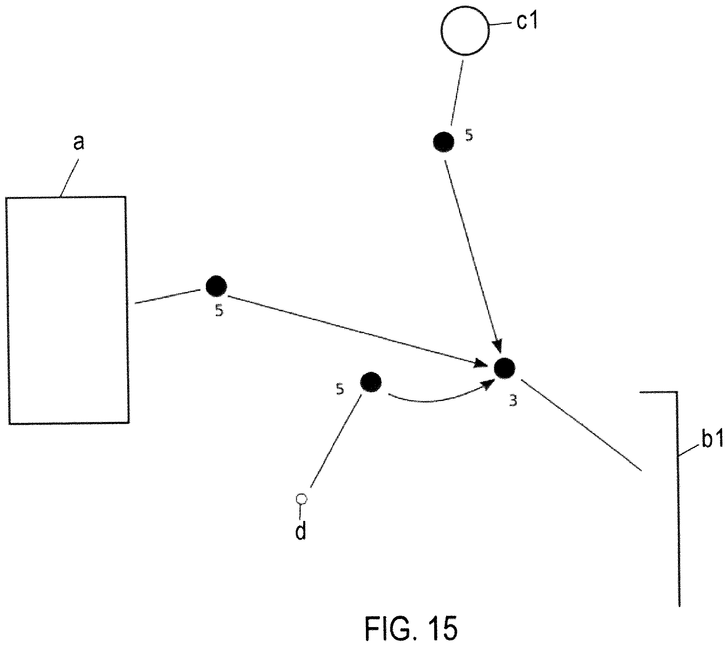

Es wird nun Bezug auf Figur 15 genommen. Der in Figur 14 gezeigte, gerichtete Graph G enthält zu jeder Schneidkontur A-D einen oder mehrere Halteteile. Nun wird versucht, eine Auswahl von je einem Knoten zu jeder Schneidkontur A-D zu treffen. Damit diese Auswahl sinnvoll ist, muss eine Bearbeitungsreihenfolge möglich sein, die keine der durch die Bögen repräsentierten Abhängigkeiten verletzt. Dies ist genau dann der Fall, wenn der aus dem Graphen G ausgewählte Teilgraph T azyklisch ist.

Die algorithmische Umsetzung bedient sich folgender Beobachtung. Für zwei Knoten u und v eines gerichteten Graphen G gilt, dass genau dann ein Zyklus existiert, der u und v enthält, wenn u und v in der gleichen starken Zusammenhangskomponente liegen. Dies bedeutet, dass nach Partitionierung des Graphen G in seine starken Zusammenhangskomponenten aus jeder Zusammenhangskomponente maximal ein Knoten gewählt werden darf. Da die starken Zusammenhangskomponenten der in Schneidanwendungen generierten Graphen typischerweise sehr klein sind, genügen hierfür in der Regel einfache Heuristiken und simples Durchprobieren. Dabei wird versucht, nach Möglichkeit solche Knoten zu wählen, die ein möglichst großes Knotengewicht besitzen. In Figur 15 ist beispielhaft eine solche mögliche Auswahl eines azyklischen Teilgraphen T, der zu jeder Schneidkontur genau einen Knoten (= Halteteil) enthält, aus dem gerichteten Graphen G gezeigt.

Allerdings kann es sein, dass es nicht möglich ist, für jede vorhandene Schneidkontur einen Halteteil so zu wählen, dass ein azyklischer Teilgraph T entsteht. Dies kann durch begrenzte Rechenleistung bedingt sein, die es einem nicht erlaubt, eine korrekt mögliche Auswahl zu finden. Typischerweise scheitert das Finden einer Auswahl für jede Schneidkontur jedoch daran, dass dies aufgrund der geometrischen Beschaffenheit der zu schneidenden Konturen unmöglich ist. Tritt dieser Fall auf, können Maßnahmen ergriffen werden, die weiter unten näher erläutert werden.

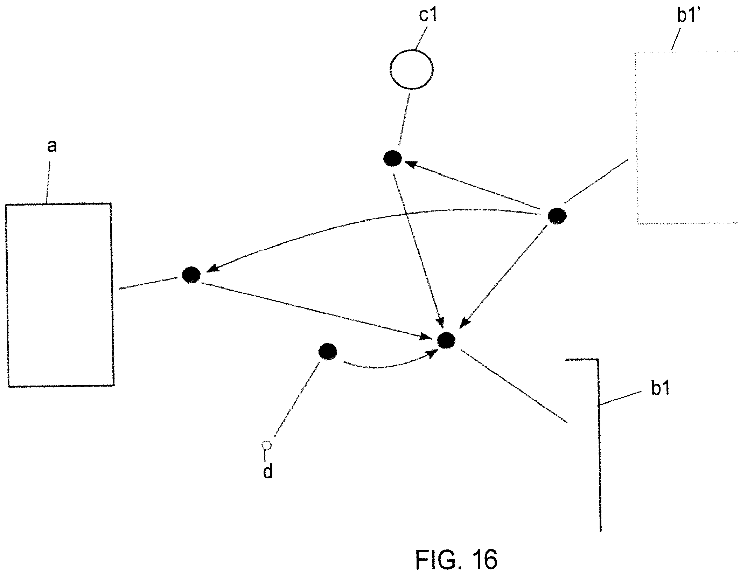

Es wird nun Bezug auf Figur 16 genommen. Der gerichtete Graph G wurde lediglich aus den möglichen Halteteilen der Schneidkonturen A-D konstruiert. Die Komplemente dieser Halteteile, die sich aus den Frühteilen bzw. Frühstegen zusammensetzen, werden nun zum azyklischen Teilgraphen T hinzugefügt. Zu diesem Zweck wird für jeden Frühteil entweder ein Knoten oder für jeden zum Frühteil gehörenden Frühsteg ein Knoten in den azyklischen Teilgraphen T eingefügt, so dass ein modifizierter azyklischer Teilgraph T' entsteht. Allgemein können als Komplemente dieser Halteteile Frühteile und/oder Frühstege als Knoten hinzugefügt werden. Hierbei wird für je zwei Knoten u und v ein Bogen von u nach v hinzugefügt, wenn gilt, dass der Knoten u zu einer Frühkontur und der Knoten v zu einem Halteteil gehört, wobei auch gilt:
- u und v gehören zur gleichen Kontur, oder
- wenn K die zum Knoten v gehörige Schneidkontur ist, dann ist K relevante Kontur und die beiden Punktemengen S(K, p) und u haben nichtleeren Schnitt. Hierbei ist wieder p der Punkt, in dem die Schneidkontur K beim Schneiden des Halteteils des Knotens v zu Ende geschnitten wird.

Diese Erweiterung des azyklischen Teilgraphen T zum modifizierten azyklischen Teilgraphen T' kann zu keinen neuen Zyklen führen, da für alle neu hinzugefügten Knoten gilt, dass lediglich ausgehende Bögen zu diesen hinzugefügt werden. Dies erlaubt, die Frühkonturen so spät wie möglich zu schneiden, so dass im Schneidprozess der Anteil der bereits begonnenen, unvollendeten Schneidkonturen minimiert wird. In Figur 16 ist beispielhaft der modifizierte azyklische Teilgraph T' nach Hinzufügen des Knotens für die Frühkontur b1' gezeigt.

Durch die obigen Verfahrensschritte wurde ein modifizierter azyklischer Teilgraph T' erzeugt, so dass nun eine Bearbeitungsreihenfolge zum Schneiden der Früh- und Halteteile der Schneidkonturen A-D bestimmt werden kann. Diese Bearbeitungsreihenfolge muss notwendigerweise eine topologische Sortierung des modifizierten azyklischen Teilgraphen T' darstellen. Da ein gerichteter Graph genau dann topologisch sortierbar ist, wenn er azyklisch ist, ist dies hier durchführbar.

Vorzugsweise wird jedoch keine beliebige topologische Sortierung des modifizierten azyklischen Teilgraphen T' verwendet. Es empfiehlt sich vielmehr, folgende Gewichtungen bei der Planung der Bearbeitungsreihenfolge zu berücksichtigen:
- Minimierung der Leerfahrtstrecken und dadurch zeitliche Effizienzmaximierung,
- Minimierung der offenen Konturschnitte und dadurch Minimierung der Effekte durch äußere Einflüsse, welche zu einer Unterbrechung der Bearbeitung führen können.

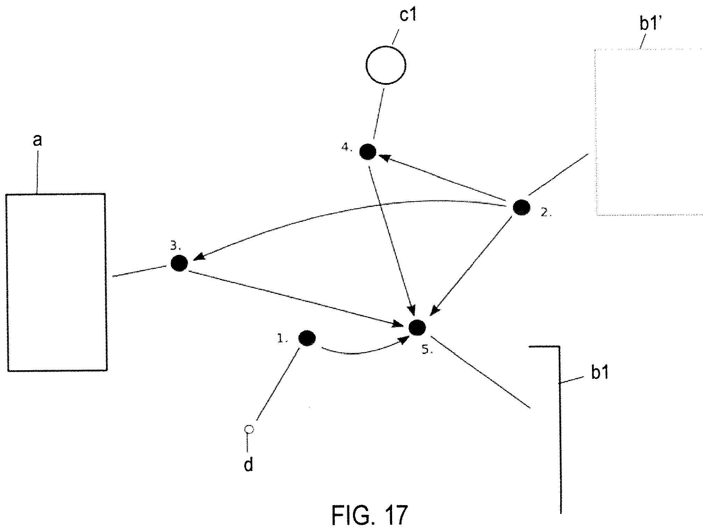

Figur 17 zeigt beispielhaft eine Bearbeitungsreihenfolge, die als topologische Sortierung des modifizierten azyklischen Teilgraphen T' sämtliche Abhängigkeiten berücksichtigt. Demnach werden gemäß der angegebenen Ordnungszahlen die Früh- und Halteteile der Schneidkonturen A-D in der folgenden Reihenfolge geschnitten: d - b1' - a - c - b1. Kollisionen zwischen einem ausgeschnittenen Werkstückteil 10 und dem Schneidkopf 3 können hierdurch vermieden werden.

Der Nutzen einer topologischen Sortierung des Graphen G lässt sich wie folgt darstellen. In dem modifizierten azyklischen Teilgraphen T' bedeutet die Tatsache, dass ein Bogen von v nach w geht, dass der Halteteil v vor dem Halteteil w geschnitten werden soll. Eine topologische Sortierung des modifizierten azyklischen Teilgraphen T' liefert eine Bearbeitungsreihenfolge, die jeden dieser Bögen respektiert: Sind v und w zwei Knoten und geht ein Bogen von v nach w, so gilt per Definition v < w. Das heißt, dass v in der topologischen Sortierung vor w kommt, also wie gewünscht zuvor abgearbeitet wird. Dies ist auch der Grund, weshalb eine azyklische Auswahl getroffen wurde. Es gilt der Satz, dass für einen gerichteten Graphen G die folgenden beiden Aussagen äquivalent sind:
- G ist azyklisch,
- G besitzt eine topologische Sortierung.

Um eine topologische Sortierung eines azyklischen gerichteten Graphen zu berechnen, iteriert man folgenden Schritt bis alle Knoten aufgebraucht sind: Man wähle sich einen beliebigen Knoten v, so dass für keinen anderen Knoten u ein Bogen (u, v) existiert. Ein solches v existiert, da G azyklisch ist. Dieses v hängt man an die bisher konstruierte topologische Sortierung an und entfernt es zusammen mit allen von v ausgehenden Bögen aus dem Graphen G.

In dem gezeigten Verfahren ist die azyklische Auswahl der Halteteile/Haltestege ausreichend zur Bestimmung der gewünschten Bearbeitungsreihenfolge in der auch die Frühteile enthalten sind, da die Knoten für die Frühteile/Frühstege nachträglich zum Graphen hinzugefügt werden, wobei von den Frühteilen/Frühstegen Bogen nur weg gerichtet sind und eine topologische Sortierung somit weiterhin möglich ist.

Wie bereits erwähnt, kann der Fall eintreten, dass es nicht möglich ist, für jede vorhandene Schneidkontur einen Halteteil oder einen oder mehrere Haltestege so zu wählen, dass ein azyklischer Teilgraph T, der zu jeder Schneidkontur genau einen Knoten, der zu einem Halteteil gehört, oder mindestens einen Knoten, der zu einem Haltesteg gehört, enthält, entsteht. Um dieses Problem zu lösen, kann das Teilverfahren "kollisionsbereinigendes Umordnen" und/oder das Teilverfahren "prozessoptimaler Microjoint" angewendet werden.

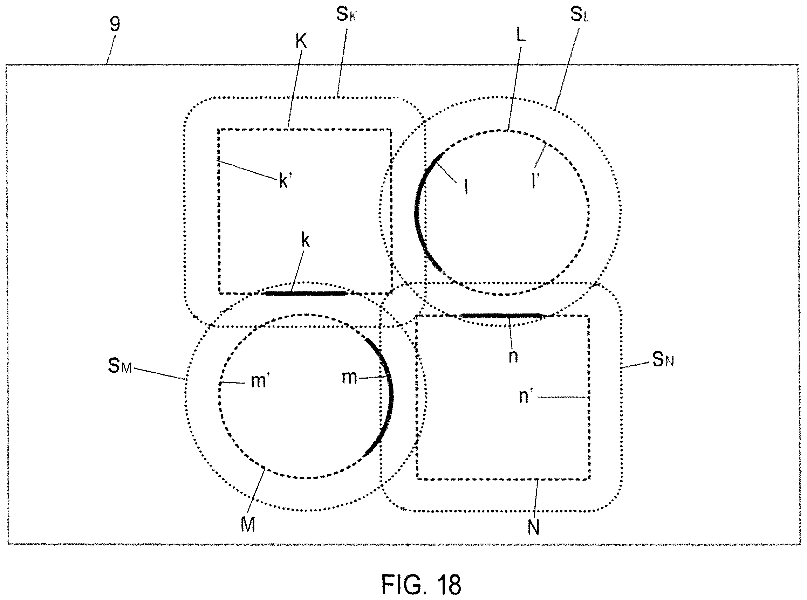

Es wird Bezug auf Figur 18 genommen, worin beispielhaft ein Werkstück 9 mit vier Schneidkonturen K, L, M, N für freizuschneidende Werkstückteile 10 gezeigt ist. Für die Schneidkontur K wurde der Halteteil k und der Frühteil k', für die Schneidkontur L der Halteteil l und der Frühteil l', für die Schneidkontur M der Halteteil m und der Frühteil m' und für die Schneidkontur N der Halteteil n und der Frühteil n' festgelegt. Die Halteteile sind jeweils mit dickeren durchgezogenen Linien, die Frühteil jeweils mit dünneren gestrichelten Linien dargestellt. Ferner sind um Schneidkontur K-N die Sicherheitszonen S_{K}, S_{L}, S_{M}, S_{N} eingezeichnet, die analog zur Vorgehensweise in den Figuren 10 bis 13 bestimmt wurden. Die Sicherheitszonen S_{K}, S_{L}, S_{M}, S_{N} sind gestrichelt gezeichnet, mit kürzeren Linien als bei den Frühteilen. Demnach befindet sich der Halteteil k abschnittsweise in der Sicherheitszone S_{M} der Schneidkontur M, der Halteteil l abschnittsweise in der Sicherheitszone S_{K} der Schneidkontur K, der Halteteil m abschnittsweise in der Sicherheitszone S_{N} der Schneidkontur N und der Halteteil n befindet sich abschnittsweise in der Sicherheitszone S_{L} der Schneidkontur L. Damit treten folgende Abhängigkeiten auf: Halteteil l muss vor Halteteil k geschnitten werden, Halteteil k muss vor Halteteil m geschnitten werden, Halteteil m muss vor Halteteil n geschnitten werden, und Halteteil m muss vor Halteteil l geschnitten werden. Somit kann ein azyklischer Teilgraph nicht ausgewählt werden.

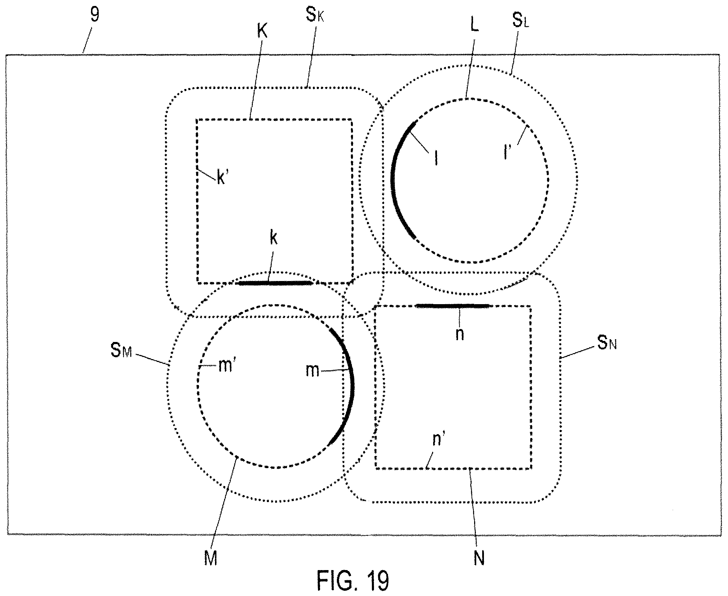

Es wird nun Bezug auf Figur 19 genommen. Abhilfe für dieses Problem kann durch Umordnen der zu schneidenden Werkstückteile beziehungsweise der Schneidkonturen geschaffen werden. In dem gezeigten Ausführungsbeispiel wurde die Schneidkontur L durch Translation relativ zu den anderen Schneidkonturen K, M, N so versetzt, dass der Halteteil l der Schneidkontur L aus der Sicherheitszone S_{K} der Schneidkontur K entfernt wurde. Es bleiben lediglich die Abhängigkeiten "Halteteil k vor Halteteil m vor Halteteil n" erhalten. Der Zyklus kann aufgelöst werden. Durch das Versetzen der Schneidkontur L wurde gleichzeitig der Halteteil n der Schneidkontur N aus der Sicherheitszone S_{L} des Schneidkontur L entfernt, was jedoch zum Auflösen des Zyklus nicht erforderlich gewesen wäre. Neben einer Translation wäre auch eine Rotation der Schneidkontur, sowie, falls schneidtechnisch möglich und für das endgültige Bauteil erlaubt, Spiegelungen zum Umordnen nutzbar.

Liegen mehrere Zyklen vor, so kann durch iteriertes Umordnen jeder dieser Zyklen einzeln eliminiert werden, wobei zu beachten ist, dass durch das Umordnen entweder keine neuen Abhängigkeiten auftreten, oder aber nur solche, die nicht ihrerseits zu neuen Zyklen führen.

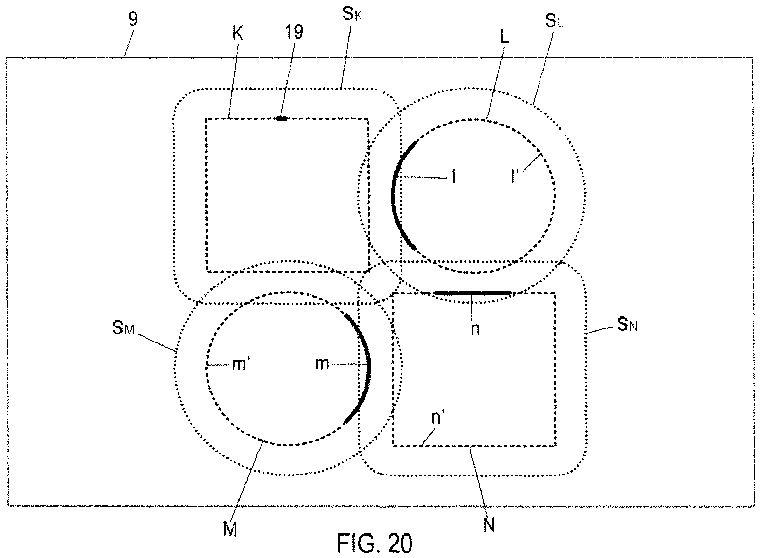

Unter Bezugnahme auf Figur 20 wird eine weitere Maßnahme zur Behebung dieses Problems durch die Verwendung von Microjoints beschrieben. Hierbei wurde für die Schneidkontur K ein Microjoint 20 festgelegt, der erst nach Freischneiden der Schneidkonturen L, M und N manuell oder maschinell entfernt, um das zur Schneidkontur K gehörige Werkstückteil freizulegen.

Die Microjoints werden nach folgender Logik minimal und damit prozessoptimal angewandt:
Für jede Schneidkontur K und jeden Punkt p auf dieser Schneidkontur K wird eine Kostenfunktion P definiert, die die Kosten P(K, p) widerspiegelt, die das Setzen eines Microjoints an der Schneidkontur K im Punkt p mit sich bringt. Kosten können sich hierbei zusammensetzen aus Faktoren wie
- Arbeitskosten, die sich durch das manuelle Auslösen des Werkstückteils mit der Schneidkontur K mit gesetztem Microjoint im Punkt p aus dem Werkstück ergeben,
- Nachbearbeitungskosten, die durch das Setzen des Microjoints an der Schneidkontur K in Punkt p entstehen.

Mit den Kostenwerten -∞ und ∞ können Microjoints an bestimmen Stellen ausgeschlossen oder erzwungen werden. Sei M die Menge aller Schneidkonturen und für jede Schneidkontur K sei Q_{K} die Menge aller Punkte von K. Dann wird eine Teilmenge N von M zusammen mit, für jedes K in N, einem Punkt p_{K} aus Q_{K} gesucht, so dass die Summe aller Werte P(K, p_{K}) mit K aus N minimal ist und alle Zyklen im Abhängigkeitsgraphen durch in den Punkten p_{K} gesetzte Microjoints aufgelöst werden. Dies bedeutet, dass die Microjoints so platziert werden, dass die durch sie entstehenden Zusatzkosten minimiert werden.

Durch den in Figur 20 an der Schneidkontur K gesetzten Microjoint 20 kann der Zyklus aufgelöst werden. Es ist nicht nötig, die anderen Schneidkonturen L, M, N ebenfalls mit Microjoints zu versehen. Zudem wurde die Annahme getroffen, dass der so platzierte Microjoint 20 ein Minimum der Kostenfunktion K darstellt. Alle anderen möglichen Microjoints hätten gleiche oder höhere Kosten verursacht. Somit sind entstehenden Bearbeitungskosten minimiert.

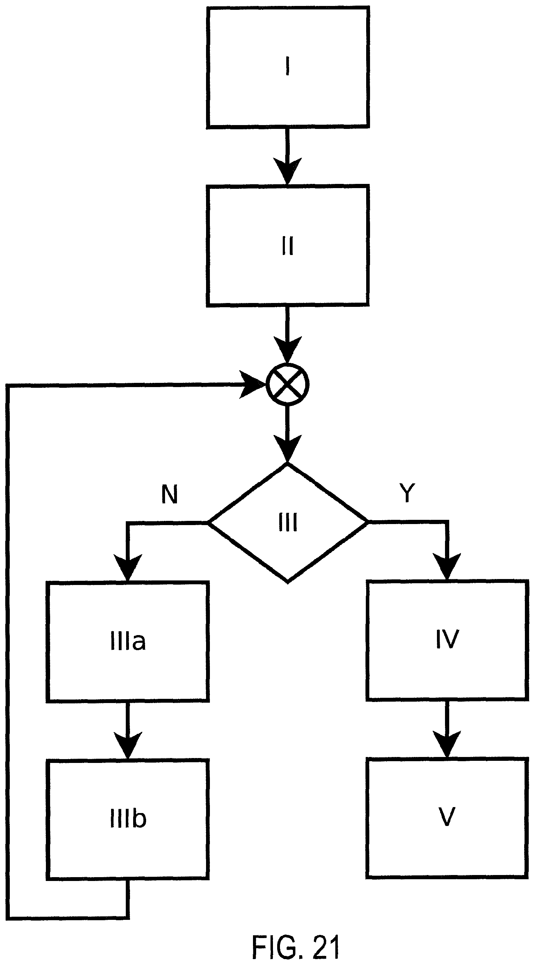

Es wird nun Bezug auf Figur 21 genommen, worin das erfindungsgemäße Verfahren anhand eines Flussdiagramms dargestellt ist.

In Schritt (I) werden Sicherheitszonen für die Schneidkonturen der Werkstückteile bestimmt. Wie dargestellt, können die Sicherheitszonen für die Schneidkonturen der Werkstückteile auf Basis einer, zu einer durch das Werkstück definierten Arbeitsebene parallelen, Querschnittfläche des Schneidkopfs, bestimmt werden. Insbesondere kann die Sicherheitszone für die Schneidkontur eines Werkstückteils durch Bilden der Minkowski-Summe aus Schneidkontur und einer effektiven Querschnittfläche des Schneidkopfs, gegeben durch die Querschnittfläche des Schneidkopfs und einer festlegbaren Sicherheitsfläche, bestimmt werden.

In Schritt (II) werden Halteteile für die Schneidkonturen bestimmt. Hierbei kann der Halteteil einer Schneidkontur eines Werkstückteils als dessen Schneidkontur bestimmt werden, falls sich in der Sicherheitszone des Werkstückteils keine Schneidkontur, insbesondere kein Schneidkonturabschnitt, eines weiteren Werkstückteils befindet. Falls sich in der Sicherheitszone des Werkstückteils die Schneidkontur, insbesondere ein Schneidkonturabschnitt, wenigstens eines weiteren Werkstückteils befindet, können Halte- und Frühteile einer Schneidkontur auf Basis einer zufälligen Auswahl bestimmt werden. Alternativ können Halte- und Frühteile einer Schneidkontur auf Basis vorgebbarer Faktoren bestimmt werden. Optional können die Halteteile der Schneidkonturen der Werkstückteile gewichtet werden, wobei im nachfolgenden Schritt (III) die Gewichtung der Halteteile berücksichtigt wird.

In Schritt (III) wird ein einziges Halteteil für jede Schneidkontur so ausgewählt, dass es mindestens eine Bearbeitungsreihenfolge zum Ausschneiden der Schneidkonturen gibt, in welcher der Frühteil einer Schneidkontur vor dem Halteteil der Schneidkontur geschnitten wird, wobei vor dem Schneiden des Halteteils der Schneidkontur ein oder mehrere sich zumindest abschnittsweise in der Sicherheitszone der Schneidkontur befindliche Frühstege und/oder ein oder mehrere sich zumindest abschnittsweise in der Sicherheitszone der Schneidkontur befindliche Haltestege und/oder mindestens eine dem Halteteil entsprechende, sich zumindest abschnittsweise in der Sicherheitszone der Schneidkontur befindliche Schneidkontur, einer oder mehrerer weiterer Schneidkonturen geschnitten werden. Der einzige Halteteil oder zumindest eine Haltesteg für jede Schneidkontur kann ausgewählt werden durch Erstellen einer Knotenmenge, gegeben durch die Menge der Halteteile und/oder Haltestege, Erstellen eines gerichteten Graphen auf Basis der in Schritt (II) erstellten Knotenmenge, wobei der Graph einen oder mehrere Bögen umfasst, die jeweils einen ersten Knoten mit einem zweiten Knoten verbinden, derart, dass ein Bogen vom ersten Knoten zum zweiten Knoten gerichtet ist, falls sich der zum ersten Knoten gehörige Halteteil oder Haltesteg zumindest abschnittsweise in der Sicherheitszone der Schneidkontur des zum zweiten Knoten gehörigen Halteteils oder Haltestegs befindet, sowie Auswählen eines azyklischen Teilgraphen aus dem gerichteten Graphen, derart, dass der azyklische Teilgraph zu jeder Schneidkontur genau einen Knoten enthält, falls der Knoten zu einem Halteteil gehört, oder mindestens einen Knoten enthält, falls der Knoten zu einem Haltesteg gehört.

Falls eine Auswahl in Schritt (III) möglich ist (Y), wird in Schritt (IV) eine Bearbeitungsreihenfolge zum Ausschneiden der Früh- und Halteteile bzw. Früh- und Haltestege. Eine Bearbeitungsreihenfolge zum Schneiden der Früh- und Halteteile kann bestimmt werden durch Einfügen von Knoten für die Frühteile und/oder Frühstege der Schneidkonturen in den in Schritt (III) ausgewählten azyklischen Teilgraphen, Einfügen von Bögen für die so eingefügten Knoten, die jeweils einen zum einem Frühteil oder Frühsteg gehörigen Knoten mit einem zu einem Halteteil oder Haltesteg gehörigen Knoten verbinden, derart, dass ein Bogen vom einen zum einem Frühteil oder Frühsteg gehörigen Knoten zu einem zu einem Halteteil oder Haltesteg gehörigen Knoten gerichtet ist, falls die beiden Knoten zur selben Schneidkontur gehören oder falls sich der Frühteil oder Frühsteg zumindest abschnittsweise in der Sicherheitszone der zum Halteteil oder Haltesteg gehörenden Schneidkontur befindet, zur Erstellung eines modifizierten azyklischen Teilgraphen, sowie Festlegen der Bearbeitungsreihenfolge durch topologisches Sortieren des modifizierten azyklischen Teilgraphen. Das topologische Sortieren kann auf Basis vorgebbarer Faktoren, beispielsweise Minimieren von Leerfahrten und/oder Minimierung offener Konturschnitte, erfolgen.

Anschließend wird in Schritt (V) der Schneidprozess für die Werkstückteile durchgeführt, wobei die Früh- und Halteteile bzw. Früh- und Haltestege der Schneidkonturen in der in Schritt (IV) ermittelten Bearbeitungsreihenfolge geschnitten werden.

Falls eine Auswahl in Schritt (III) nicht möglich ist (N), das heißt, der gerichtete Graph keinen azyklischen Teilgraphen enthält, der zu jeder Schneidkontur genau einen Knoten, der zu einem Halteteil gehört, oder mindestens einen Knoten, der zu einem Haltesteg gehört, enthält, kann in Schritt (IIIa) die Lage und/oder Orientierung zumindest einer Schneidkontur relativ zu einer anderen Schnittkontur so verändert werden, dass ein azyklischer Teilgraph entsteht, der zu jeder Schneidkontur genau einen Knoten, der zu einem Halteteil gehört, oder mindestens einen Knoten, der zu einem Haltesteg gehört, enthält. Zusätzlich oder alternativ kann in Schritt (IIIb) zumindest eine Schneidkontur mit wenigstens einem Microjoint versehen werden, so dass ein azyklischer Teilgraph entsteht, der zu jeder Schneidkontur genau einen Knoten, der zu einem Halteteil gehört, oder mindestens einen Knoten, der zu einem Haltesteg gehört. Anschließend können die Schritte (III-V) des Verfahrens durchgeführt werden.

Wie sich aus vorstehender Beschreibung ergibt, stellt die Erfindung ein Verfahren und eine Laserschneidvorrichtung zur trennenden Bearbeitung eines platten- oder rohrförmigen Werkstücks zur Verfügung, durch die eine Kollision zwischen verkippten Werkstückteilen und einem Schneidkopf zuverlässig vermieden werden kann. Die Werkstückteile können somit mit einer hohen Packungsdichte auf dem Werkstück angeordnet werden, wodurch die Produktivität und Kosteneffizienz des Verfahrens verbessert wird. Werkstückteile können mit einer hohen Präzision der Schnittkanten und kleinen Toleranzen hergestellt werden. Dies gilt insbesondere für Werkstückteile die innerhalb eines anderen Werkstückteils auszuschneiden sind.

### Bezugszeichenliste

- 1: Laserschneidvorrichtung
- 2: Schneideinrichtung
- 3: Schneidkopf
- 4: Arbeitstisch
- 5: Werkstückauflage
- 6: Querträger
- 7: Führungsschlitten
- 8: Laserstrahlquelle
- 9: Werkstück
- 10: Werkstückteil
- 11: Auflageelement
- 12: Vertiefung
- 13: Tragpunktspitze
- 14: Auflageebene
- 15: Fortsatz
- 16: Seitenrand
- 17: Gasdruckkraft
- 18: Gewichtskraft
- 19: Microjoint
- 20: Steuereinrichtung

## Patentansprüche

1. Verfahren zur trennenden Bearbeitung eines platten- oder rohrförmigen Werkstücks (9) mit auszuschneidenden Werkstückteilen (10), wobei jedes Werkstückteil (10) in einem Laserschneidprozess mithilfe eines in zumindest einer Schneidhöhe über dem Werkstück (9) positionierten Schneidkopfes (3) entlang einer Schneidkontur (A-E) ausgeschnitten wird, wobei zumindest ein ausgeschnittenes Werkstückteil (10) relativ zum Werkstück (9) verkippbar ist, mit den folgenden Schritten:
(I) Bestimmen von Sicherheitszonen (S_{A}-S_{D}) für die Schneidkonturen (A-E), wobei die Sicherheitszone (S_{A}-S_{D}) einer Schneidkontur (A-E) einen Bereich angibt, in dem eine Kollision zwischen dem in Schneidhöhe positionierten Schneidkopf (3) und dem zugehörigen verkippten Werkstückteil (10) auftreten kann,
(II) Bestimmen von Halteteilen (a, b1, b2, c1, c2, d, e) für die Schneidkonturen (A-E) der Werkstückteile (10), derart, dass die Schneidkontur (A-E) eines Werkstückteils (10) in einen, ein oder mehrere Haltestege aufweisenden, Halteteil (b1, b2, c2, e) und einen, ein oder mehrere Frühstege aufweisenden Frühteil (b1', b2', c2', e') aufgeteilt wird oder der Halteteil (a, c1, d) durch die komplette Schneidkontur (A-E) gegeben ist, wobei für jede Schneidkontur (A-E) mindestens ein Halteteil (a, b1, b2, c1, c2, d, e) bestimmt wird,
(III) Auswählen eines einzigen Halteteils oder mindestens eines Haltestegs für jede Schneidkontur, derart, dass es mindestens eine Bearbeitungsreihenfolge zum Ausschneiden der Schneidkonturen (A-E) gibt, in welcher der Frühteil (b1') einer Schneidkontur (B) vor dem Halteteil (b1) der Schneidkontur (B) geschnitten wird, wobei vor dem Schneiden des Halteteils (b1) der Schneidkontur (B) ein oder mehrere sich zumindest abschnittsweise in der Sicherheitszone (S_{B}) der Schneidkontur (B) befindliche Frühstege und/oder ein oder mehrere sich zumindest abschnittsweise in der Sicherheitszone (S_{B}) der Schneidkontur (B) befindliche Haltestege (a, c1, b, e) und/oder mindestens eine dem Halteteil entsprechende, sich zumindest abschnittsweise in der Sicherheitszone (S_{B}) der Schneidkontur (B) befindliche Schneidkontur (A, C, D, E) geschnitten werden, wobei für die Schneidkonturen (A-E) jeweils ein einziger Halteteil oder ein oder mehrere Haltestege ausgewählt werden durch die nachfolgenden Schritte (III-1) bis (III-3) :
(III-1) Erstellen einer Knotenmenge (V), gegeben durch die Menge der Halteteile und/oder Haltestege,
(III-2) Erstellen eines gerichteten Graphen (G) auf Basis der in Schritt (III-1) erstellten Knotenmenge (V), wobei der Graph einen oder mehrere Bögen umfasst, die jeweils einen ersten Knoten mit einem zweiten Knoten verbinden, derart, dass ein Bogen vom ersten Knoten zum zweiten Knoten gerichtet ist, falls sich der zum ersten Knoten gehörige Halteteil oder Haltesteg zumindest abschnittsweise in der Sicherheitszone der Schneidkontur des zum zweiten Knoten gehörigen Halteteils oder Haltestegs befindet,
(III-3) Auswählen eines azyklischen Teilgraphen (T) aus dem in Schritt (III-2) erstellten gerichteten Graphen (G), derart, dass der azyklische Teilgraph(T) zu jeder Schneidkontur genau einen Knoten, der zu einem Halteteil gehört, oder mindestens einen Knoten, der zu einem Haltesteg gehört, enthält.
(IV) Bestimmen einer in Schritt (III) definierten Bearbeitungsreihenfolge zum Ausschneiden der Schneidkonturen (A-E),
(V) Durchführen des Schneidprozesses für die Werkstückteile (10), wobei die Schneidkonturen (A-E) in der in Schritt (IV) ermittelten Bearbeitungsreihenfolge geschnitten werden.

2. Verfahren nach Anspruch 1, **dadurch gekennzeichnet, dass** die Bearbeitungsreihenfolge in Schritt (IV) so bestimmt wird, dass zumindest ein Werkstückteil (10) freigeschnitten wird, bevor das Schneiden aller Frühteile der Schneidkonturen (A-E) der Werkstückteile (10) beendet ist.

3. Verfahren nach einem der Ansprüche 1 oder 2, **dadurch gekennzeichnet, dass** die in Schritt (I) bestimmten Sicherheitszonen (S_{A}-S_{D}) für die Schneidkonturen (A-E) auf Basis einer, zu einer Auflageebene (14) für das Werkstück (9) parallelen, Querschnittfläche des Schneidkopfs (3) bestimmt werden.

4. Verfahren nach Anspruch 3, **dadurch gekennzeichnet, dass** die Sicherheitszone (S_{A}-S_{D}) für eine Schneidkontur (A-E) durch Bilden der Minkowski-Summe aus der Fläche der Schneidkontur und einer effektiven Querschnittfläche des Schneidkopfs (3), gegeben durch die Querschnittfläche (C(z)) des Schneidkopfs und einer festlegbaren Sicherheitsfläche (Dᵣ), bestimmt wird.

5. Verfahren nach einem der Ansprüche 3 oder 4, **dadurch gekennzeichnet, dass** die Sicherheitszone (S_{A}-S_{D}) für eine Schneidkontur (A-E) in Abhängigkeit einer Kipphöhe (h) eines Werkstückteils (10) relativ zu einer Auflageebene (14) für das Werkstück (9) und der Schneidhöhe des Schneidkopfs (3) bestimmt wird.

6. Verfahren nach einem der Ansprüche 1 bis 5, **dadurch gekennzeichnet, dass** in Schritt (II) als Halteteil (a, c1, d, e) einer Schneidkontur (A, C, D, E) die komplette Schneidkontur bestimmt wird, falls sich in der Sicherheitszone (S_{A}, S_{C}, S_{D}) der Schneidkontur zumindest kein Schneidkonturabschnitt einer weiteren Schneidkontur befindet.

7. Verfahren nach einem der vorhergehenden Ansprüche, **dadurch gekennzeichnet, dass** in Schritt (IV) die Bearbeitungsreihenfolge zum Ausschneiden der Schneidkonturen bestimmt wird durch:
(IV-1) Einfügen von Knoten für die Frühteile und/oder Frühstege der Schneidkonturen (A-E) in den in Schritt (III-3) ausgewählten azyklischen Teilgraphen (T),
(IV-2) Einfügen von Bögen für die in Schritt (IV-1) eingefügten Knoten, die jeweils einen zum einem Frühteil oder Frühsteg gehörigen Knoten mit einem zu einem Halteteil oder Haltesteg gehörigen Knoten verbinden, derart, dass ein Bogen vom einen zum einem Frühteil oder Frühsteg gehörigen Knoten zu einem zu einem Halteteil oder Haltesteg gehörigen Knoten gerichtet ist, falls die beiden Knoten zur selben Schneidkontur gehören oder falls sich der Frühteil oder Frühsteg zumindest abschnittsweise in der Sicherheitszone des Halteteils oder Haltestegs befindet, zur Erstellung eines modifizierten azyklischen Teilgraphen (T'),
(IV-3) Festlegen der Bearbeitungsreihenfolge durch topologisches Sortieren des in Schritt (IV-2) erstellten, modifizierten azyklischen Teilgraphen (T').

8. Verfahren nach Anspruch 7, **dadurch gekennzeichnet, dass** in Schritt (IV-3) das topologische Sortieren des modifizierten azyklischen Teilgraphen (T') auf Basis vorgebbarer Faktoren, beispielsweise Minimieren von Leerfahrten und/oder Minimierung offener Konturschnitte, erfolgt.

9. Verfahren nach einem der Ansprüche 1 bis 8, **dadurch gekennzeichnet, dass** die in Schritt (II) bestimmten Halteteile oder Haltestege der Schneidkonturen (A-E) gewichtet werden, wobei in Schritt (III) die Gewichtung der Halteteile oder Haltestege berücksichtigt wird.

10. Verfahren nach einem der Ansprüche 1 bis 9, **dadurch gekennzeichnet, dass** wenn der in Schritt (III-2) erstellte Graph (G) keinen azyklischen Teilgraphen enthält, der zu jeder Schneidkontur mindestens einen Knoten enthält, die Lage und/oder Orientierung zumindest einer Schneidkontur relativ zu einer anderen Schnittkontur so verändert wird, dass ein azyklischer Teilgraph, der zu jeder Schneidkontur mindestens einen Knoten enthält, entsteht.

11. Verfahren nach einem der Ansprüche 1 bis 10, **dadurch gekennzeichnet, dass** wenn der in Schritt (III-2) erstellte Graph (G) keinen azyklischen Teilgraphen enthält, der zu jeder Schneidkontur mindestens einen Knoten enthält, zumindest eine Schneidkontur mit wenigstens einem Microjoint (19) versehen wird, derart, dass ein azyklischer Teilgraph entsteht, der zu jeder Schneidkontur mindestens einen Knoten enthält, wobei das zur Schneidkontur gehörende Werkstückteil nach Durchführen des Schneidprozesses für die übrigen Werkstückteile freigelegt wird.

12. Verfahren nach einem der Ansprüche 1 bis 11, **dadurch gekennzeichnet, dass** in Schritt (III-2) der gerichtete Graph so erstellt wird, dass ein von einem ersten Knoten zu einem zweiten Knoten gerichteter Bogen nur dann hinzugefügt wird, wenn die zum zweiten Knoten gehörige Schneidkontur auf Basis vorgebbarer Faktoren als relevante Schneidkontur definiert wird.

13. Laserschneidvorrichtung (1) zur trennenden Bearbeitung eines platten- oder rohrförmigen Werkstücks (9), welche eine elektronische Steuereinrichtung (20) zur Steuerung/Regelung der trennenden Bearbeitung des Werkstücks (9) aufweist, welche zur Durchführung des Verfahrens nach einem der Ansprüche 1 bis 12 eingerichtet ist.

14. Programmcode für eine zur Datenverarbeitung geeignete elektronische Steuereinrichtung für eine Laserschneidvorrichtung gemäß Anspruch 13, welcher Steuerbefehle enthält, die die besagte Steuereinrichtung (20) zur Durchführung eines Verfahrens nach einem der Ansprüche 1 bis 12 veranlassen.

15. Computerprogrammprodukt mit einem gespeicherten Programmcode für eine zur Datenverarbeitung geeignete elektronische Steuereinrichtung (20) für eine Laserschneidvorrichtung gemäß Anspruch 13, welcher Steuerbefehle enthält, die die besagte Steuereinrichtung (20) zur Durchführung des Verfahrens nach einem der Ansprüche 1 bis 12 veranlassen.

## Claims

1. Method for separatively machining a planar or tubular workpiece (9) which has workpiece parts (10) to be cut out, each workpiece part (10) being cut out along a cutting contour (A-E) in a laser cutting process by means of a cutting head (3) positioned above the workpiece (9) at at least one cutting height, at least one cut-out workpiece part (10) being tiltable relative to the workpiece (9), the method comprising the following steps:
(I) determining safety zones (S_{A}-S_{D}) for the cutting contours (A-E), the safety zone (S_{A}-S_{D}) of a cutting contour (A-E) indicating a region in which a collision between the cutting head (3) positioned at the cutting height and the associated tilted workpiece part (10) can occur,
(II) determining holding parts (a, b1, b2, c1, c2, d, e) for the cutting contours (A-E) of the workpiece parts (10), such that the cutting contour (A-E) of a workpiece part (10) is divided into a holding part (b1, b2, c2, e) having one or more holding webs and an early part (b1', b2', c2', e') having one or more early webs or the holding part (a, c1, d) is constituted by the complete cutting contour (A-E), at least one holding part (a, b1, b2, c1, c2, d, e) being determined for each cutting contour (A-E),
(III) selecting a single holding part or at least one holding web for each cutting contour, such that there is at least one machining sequence for cutting out the cutting contours (A-E), in which machining sequence the early part (b1') of a cutting contour (B) is cut before the holding part (b1) of the cutting contour (B), one or more early webs located at least partially in the safety zone (S_{B}) of the cutting contour (B) and/or one or more holding webs (a, c1, b, e) located at least partially in the safety zone (S_{B}) of the cutting contour (B) and/or at least one cutting contour (A, C, D, E) corresponding to the holding part and located at least partially in the cutting zone (S_{B}) of the cutting contour (B) being cut before the holding part (b1) of the cutting contour (B) is cut, a single holding part or one or more holding webs being selected for each of the cutting contours (A-E) by the following steps (111-1) to (III-3):
(III-1) creating a node set (V) constituted by the set of holding parts and/or holding webs,
(III-2) creating a directed graph (G) on the basis of the node set (V) created in step (111-1), the graph comprising one or more arcs which each connect a first node to a second node, such that an arc is directed from the first node to the second node if the holding part or holding web belonging to the first node is located at least partially in the safety zone of the cutting contour of the holding part or holding web belonging to the second node,
(III-3) selecting an acyclic subgraph (T) from the directed graph (G) created in step (III-2), such that the acyclic subgraph (T) contains, with respect to each cutting contour, exactly one node that belongs to a holding part or at least one node that belongs to a holding web,
(IV) determining a machining sequence defined in step (III) for cutting out the cutting contours (A-E),
(V) carrying out the cutting process for the workpiece parts (10), the cutting contours (A-E) being cut in the machining sequence determined in step (IV).

2. Method according to claim 1, **characterized in that** the machining sequence in step (IV) is determined in such a way that at least one workpiece part (10) is cut free before the cutting of all of the early parts of the cutting contours (A-E) of the workpiece parts (10) has been completed.

3. Method according to either claim 1 or claim 2, **characterized in that** the safety zones (S_{A}-S_{D}) determined in step (I) for the cutting contours (A-E) can be determined on the basis of a cross-sectional area of the cutting head (3) that is parallel to a support plane (14) for the workpiece (9).

4. Method according to claim 3, **characterized in that** the safety zone (S_{A}-S_{D}) for a cutting contour (A-E) is determined by forming the Minkowski sum from the area of the cutting contour and an effective cross-sectional area of the cutting head (3), constituted by the cross-sectional area (C(z)) of the cutting head and a definable safety area (Dᵣ).

5. Method according to either claim 3 or claim 4, **characterized in that** the safety zone (S_{A}-S_{D}) for a cutting contour (A-E) is determined depending on a tilting height (h) of a workpiece part (10) relative to a support plane (14) for the workpiece (9) and the cutting height of the cutting head (3).

6. Method according to any of claims 1 to 5, **characterized in that**, in step (II), the complete cutting contour is determined as the holding part (a, c1, d, e) of a cutting contour (A, C, D, E) if at least no cutting contour portion of a further cutting contour is located in the safety zone (S_{A}, S_{C}, S_{D}) of the cutting contour.

7. Method according to any of the preceding claims, **characterized in that**, in step (IV), the machining sequence for cutting out the cutting contours is determined by:
(IV-1) inserting nodes for the early parts and/or early webs of the cutting contours (A-E) into the acyclic subgraphs (T) selected in step (III-3),
(IV-2) inserting arcs for the nodes inserted in step (IV-1), which arcs each connect a node belonging to an early part or early web to a node belonging to a holding part or holding web, such that an arc is directed from a node belonging to an early part or early web to a node belonging to a holding part or holding web if the two nodes belong to the same cutting contour or if the early part or early web is located at least partially in the safety zone of the holding part or holding web, in order to create a modified acyclic subgraph (T'),
(IV-3) specifying the machining sequence by topologically sorting the modified acyclic subgraph (T') created in step (IV-2).

8. Method according to claim 7, **characterized in that**, in step (IV-3), the modified acyclic subgraph (T') is topologically sorted on the basis of predeterminable factors, for example minimizing empty runs and/or minimizing open contour cuts.

9. Method according to any of claims 1 to 8, **characterized in that** the holding parts or holding webs of the cutting contours (A-E) that are determined in step (II) are weighted, the weighting of the holding parts or holding webs being taken into account in step (III).

10. Method according to any of claims 1 to 9, **characterized in that**, if the graph (G) created in step (III-2) does not contain an acyclic subgraph which contains at least one node with respect to each cutting contour, the position and/or orientation of at least one cutting contour is changed relative to another cutting contour such that an acyclic subgraph is produced that contains at least one node with respect to each cutting contour.

11. Method according to any of claims 1 to 10, **characterized in that**, if the graph (G) created in step (III-2) does not contain an acyclic subgraph which contains at least one node with respect to each cutting contour, at least one cutting contour is provided with at least one microjoint (19) such that an acyclic subgraph is produced that contains at least one node with respect to each cutting contour, the workpiece part belonging to the cutting contour being exposed after the cutting process has been carried out for the remaining workpiece parts.

12. Method according to any of claims 1 to 11, **characterized in that**, in step (III-2), the directed graph is created such that an arc directed from a first node to a second node is added only if the cutting contour belonging to the second node is defined as a relevant cutting contour on the basis of predeterminable factors.

13. Laser cutting device (1) for separatively machining a planar or tubular workpiece (9), which laser cutting device has an electronic control apparatus (20) for controlling/regulating the separative machining of the workpiece (9), which control apparatus is configured to carry out the method according to any of claims 1 to 12.

14. Program code for an electronic control apparatus suitable for data processing for a laser cutting device according to claim 13, which program code contains control commands which prompt said control apparatus (20) to carry out a method according to any of claims 1 to 12.

15. Computer program product comprising a stored program code for an electronic control apparatus (20) suitable for data processing for a laser cutting device according to claim 13, which program code contains control commands which prompt said control apparatus (20) to carry out the method according to any of claims 1 to 12.

## Revendications

1. Procédé d'usinage séparatif d'une pièce (9) en forme de plaque ou de tube comportant des parties (10) à dissocier par découpe, chaque partie (10) de ladite pièce étant dissociée par découpe en un processus de découpe au laser, le long d'un profil de découpe (A-E), à l'aide d'une tête de découpe (3) positionnée au-dessus de la pièce (9) à au moins une hauteur de découpe, sachant qu'au moins une partie (10), dissociée par découpe d'avec la pièce, peut basculer par rapport à ladite pièce (9), incluant les étapes suivantes :
(I) détermination de zones de sécurité (S_{A}-S_{D}) affectées aux profils de découpe (A-E), la zone de sécurité (S_{A}-S_{D}) d'un profil de découpe (A-E) indiquant une région dans laquelle une collision peut survenir entre la tête de découpe (3), positionnée à la hauteur de découpe, et la partie associée (10) de la pièce qui est animée d'un basculement,
(II) détermination de parties de maintien (a, b1, b2, c1, c2, d, e) affectées aux profils de découpe (A-E) des parties (10) de la pièce, de façon telle que le profil de découpe (A-E) d'une partie (10) de la pièce soit scindé en une partie de maintien (b1, b2, c2, e) présentant une ou plusieurs membrure(s) de maintien, et en une partie initiale (b1', b2', c2', e') présentant une ou plusieurs membrure(s) initiale(s), ou bien que la partie de maintien (a, c1, d) soit procurée par l'intégralité du profil de découpe (A-E), sachant qu'au moins une partie de maintien (a, b1, b2, c1, c2, d, e) est déterminée pour chaque profil de découpe (A-E),
(III) sélection, pour chaque profil de découpe, d'une unique partie de maintien ou d'au moins une membrure de maintien de manière à instaurer, en vue de la dissociation par découpe des profils de découpe (A-E), au moins un ordre séquentiel d'usinage dans lequel la partie initiale (b1') d'un profil de découpe (B) est sectionnée avant la partie de maintien (b1) dudit profil de découpe (B), sachant que, préalablement au sectionnement de ladite partie de maintien (b1) dudit profil de découpe (B), il s'opère un sectionnement d'une ou plusieurs membrure(s) initiale(s) située(s), au moins par tronçons, dans la zone de sécurité (S_{B}) dudit profil de découpe (B), et/ou d'une ou plusieurs membrure(s) de maintien (a, c1, b, e) située(s), au moins par tronçons, dans ladite zone de sécurité (S_{B}) dudit profil de découpe (B), et/ou d'au moins un profil de découpe (A, C, D, E) correspondant à la partie de maintien et situé, au moins par tronçons, dans ladite zone de sécurité (S_{B}) dudit profil de découpe (B), sachant qu'une unique partie de maintien, ou une ou plusieurs membrure(s) de maintien, sont respectivement sélectionnées, pour les profil de découpe (A-E), par les étapes (III-1) à (III-3) suivantes :
(III-1) instauration d'un ensemble de nœuds (V) procuré par l'ensemble des parties de maintien et/ou membrures de maintien,
(III-2) création d'un graphe orienté (G) sur la base de l'ensemble de nœuds (V) instauré à l'étape (III-1), lequel graphe comprend un ou plusieurs arc(s) qui relie(nt), à chaque fois, un premier nœud à un second nœud de telle manière qu'un arc soit dirigé vers le second nœud, à partir du premier nœud, pour le cas où la partie de maintien ou la membrure de maintien appartenant audit premier nœud se trouve, au moins par tronçons, dans la zone de sécurité du profil de découpe de la partie de maintien ou de la membrure de maintien appartenant audit second nœud,
(III-3) sélection d'un sous-graphe acyclique (T) à partir du graphe orienté (G) créé à l'étape (III-2), de telle sorte que ledit sous-graphe acyclique (T) renferme, pour chaque profil de découpe, exactement un nœud appartenant à une partie de maintien, ou au moins un nœud appartenant à une membrure de maintien,
(IV) détermination d'un ordre séquentiel d'usinage défini à l'étape (III), en vue de la dissociation par découpe des profils de découpe (A-E),
(V) exécution du processus de découpe destiné aux parties (10) de la pièce, les profils de découpe (A-E) étant sectionnés dans l'ordre séquentiel d'usinage spécifié à l'étape (IV).

2. Procédé selon la revendication 1, **caractérisé par le fait que** l'ordre séquentiel d'usinage est déterminé, à l'étape (IV), de façon telle qu'au moins une partie (10) de la pièce soit détachée, par sectionnement, avant l'achèvement du sectionnement de toutes les parties initiales des profils de découpe (A-E) desdites parties (10) de la pièce.

3. Procédé selon l'une des revendications 1 ou 2, **caractérisé par le fait que** les zones de sécurité (S_{A}-S_{D}) affectées aux profils de découpe (A-E), déterminées à l'étape (I), sont déterminées sur la base d'une aire de section transversale de la tête de découpe (3) qui est parallèle à un plan d'appui (14) dédié à la pièce (9).

4. Procédé selon la revendication 3, **caractérisé par le fait que** la zone de sécurité (S_{A}-S_{D}) affectée à un profil de découpe (A-E) est déterminée par formation de la somme de Minkowski fondée sur la surface dudit profil de découpe et sur une aire de section transversale opérante de la tête de découpe (3), procurée par l'aire de section transversale [C(z)] de ladite tête de découpe et par une surface de sécurité (Dᵣ) pouvant être fermement établie.

5. Procédé selon l'une des revendications 3 ou 4, **caractérisé par le fait que** la zone de sécurité (S_{A}-S_{D}) affectée à un profil de découpe (A-E) est déterminée en fonction d'une hauteur de basculement (h) d'une partie (10) de la pièce, par rapport à un plan d'appui (14) dédié à ladite pièce (9), et de la hauteur de sectionnement de la tête de découpe (3).

6. Procédé selon l'une des revendications 1 à 5, **caractérisé par le fait que** le profil de découpe intégral est déterminé en tant que partie de maintien (a, c1, d, e) d'un profil de découpe (A, C, D, E), à l'étape (II), dans le cas où au moins aucun tronçon d'un autre profil de découpe ne se trouve dans la zone de sécurité (S_{A}, S_{C}, S_{D}) dudit profil de découpe.

7. Procédé selon l'une des revendications précédentes, **caractérisé par le fait qu'**à l'étape (IV), l'ordre séquentiel d'usinage dévolu à la dissociation par découpe des profils de découpe est déterminé par :
(IV-1) une intégration, dans le sous-graphe acyclique (T) sélectionné à l'étape (III-3), de nœuds assignés aux parties initiales et/ou aux membrures initiales des profils de découpe (A-E),
(IV-2) une intégration d'arcs qui sont assignés aux nœuds intégrés à l'étape (IV-1) et qui relient, à chaque fois, un nœud appartenant à une partie initiale, ou à une membrure initiale, à un nœud appartenant à une partie de maintien ou à une membrure de maintien, de telle sorte qu'un arc soit dirigé vers un nœud appartenant à une partie de maintien ou à une membrure de maintien, à partir de l'un des nœuds appartenant à l'une des parties initiales ou membrures initiales, dans le cas où les deux nœuds relèvent du même profil de découpe, ou bien dans le cas où ladite partie initiale ou membrure initiale se trouve, au moins par tronçons, dans la zone de sécurité de ladite partie de maintien ou membrure de maintien, de manière à instaurer un sous-graphe acyclique (T') modifié,
(IV-3) une consignation dudit ordre séquentiel d'usinage par tri topologique dudit sous-graphe acyclique (T') modifié, instauré à l'étape (IV-2).

8. Procédé selon la revendication 7, **caractérisé par le fait qu'**à l'étape (IV-3), le tri topologique du sous-graphe acyclique (T') modifié s'opère sur la base de facteurs pouvant être préétablis, par exemple une minimisation de courses à vide et/ou une minimisation de sectionnements de profils ouverts.

9. Procédé selon l'une des revendications 1 à 8, **caractérisé par** une pondération des parties de maintien ou membrures de maintien des profils de découpe (A-E) déterminées à l'étape (II), la pondération desdites parties de maintien ou membrures de maintien étant prise en compte à l'étape (III).

10. Procédé selon l'une des revendications 1 à 9, **caractérisé par le fait que**, lorsque le graphe (G), instauré à l'étape (III-2), ne contient aucun sous-graphe acyclique renfermant au moins un nœud pour chaque profil de découpe, la position et/ou l'orientation d'au moins un profil de découpe, par rapport à un autre profil de découpe, est (sont) modifiée(s) de manière qu'il soit créé un sous-graphe acyclique renfermant au moins un nœud pour chaque profil de découpe.

11. Procédé selon l'une des revendications 1 à 10, **caractérisé par le fait que**, lorsque le graphe (G) instauré à l'étape (III-2) ne contient aucun sous-graphe acyclique renfermant au moins un nœud pour chaque profil de découpe, au moins un profil de découpe est pourvu d'au moins une microjonction (19), de manière qu'il soit créé un sous-graphe acyclique renfermant au moins un nœud pour chaque profil de découpe, sachant que la partie de la pièce, relevant dudit profil de découpe, est détachée après exécution du processus de découpe dévolu aux parties restantes de ladite pièce.

12. Procédé selon l'une des revendications 1 à 11, **caractérisé par le fait que** le graphe orienté est créé, à l'étape (III-2), de façon telle qu'un arc, dirigé vers un second nœud à partir d'un premier nœud, soit ajouté uniquement lorsque le profil de découpe, appartenant audit second nœud, est défini en tant que profil de découpe pertinent sur la base de facteurs pouvant être préétablis.

13. Dispositif (1) de découpe au laser, dévolu à l'usinage séparatif d'une pièce (9) en forme de plaque ou de tube, muni d'un appareil de commande électronique (20) affecté à la commande/régulation de l'usinage séparatif de ladite pièce (9), agencé pour la mise en œuvre du procédé conforme à l'une des revendications 1 à 12.

14. Code de programmation destiné à un appareil de commande électronique approprié pour le traitement de données, dédié à un dispositif de découpe au laser conforme à la revendication 13, renfermant des instructions de commande qui incitent ledit appareil de commande (20) à la mise en œuvre d'un procédé conforme à l'une des revendications 1 à 12.

15. Produit de programme informatique pourvu d'un code de programmation mémorisé, destiné à un appareil de commande électronique approprié pour le traitement de données, dédié à un dispositif de découpe au laser conforme à la revendication 13, renfermant des instructions de commande qui incitent ledit appareil de commande (20) à la mise en œuvre du procédé conforme à l'une des revendications 1 à 12.
